# EUROPEAN PATENT APPLICATION

(11) **EP 1 847 961 A1**
(43) Date of publication of application: **24.10.2007**
(21) Application number: 06712346.3
(22) Date of filing: 25.01.2006
(51) Int. Cl.: G06T 7/20, G02B 21/00, G06T 1/00

(54) **OBJECT-TRACING APPARATUS, MICROSCOPE SYSTEM, AND A COMPUTER PROGRAM PRODUCT FOR OBJECT-TRACING APPARATUS**

(30) Priority: 31.01.2005 JP 2005024512
(71) Applicant: Olympus Corporation, Tokyo 151-0072 (JP)
(72) Inventor: OHNO, Yoshinori, Shibuya-ku, Tokyo 151-0072 (JP)
(74) Representative: von Hellfeld, Axel
(86) International application number: PCT/JP2006/301151
(87) International publication number: WO 2006/080355

(57) **Abstract**

An object-tracking apparatus (1) includes, for observing an object area in an image and accurately track a tracking target, an image acquiring unit (2c) that acquires image data; an area detector (2d) that detects the object area from the image; a parameter calculator (2e) that calculates an area parameter which indicates a property of the object image; an area identifying unit (2f) that provides the object area at a processing target time point with an identifier which shows a correspondence between the object area at the processing target time point and the object area at an identification time point; a history generator (4a) that associates the identifier with the area parameter to generate property information, and associates history information of respective time points with time series to generate history information; a consistency determining unit (4b) that determines a consistency in the history information from a determination time point to the processing target time point; and a history correcting unit (4c) that corrects the history information when the consistency determining unit (4b) determines no consistency.

## Description

### TECHNICAL FIELD

The present invention relates to an object-tracking apparatus, a microscope system, and an object-tracking program, specifically to an object-tracking apparatus, a microscope system, and an object-tracking program which allow an observation of an image area corresponding to an imaging target in each of images picked up at multiple time points in time series and a tracking of the imaging target.

### BACKGROUND ART

Conventionally, an observation of various living specimens has been performed by using a microscope and the like. In the observation of living specimens by using the microscope, a specimen whose observation target is stained in accordance with the intended purpose is normally disposed on a glass slide, and visually observed via a magnifying optical system. Such an observation using the microscope is often employed for the purpose of measuring a movement of a microbe, cell, and the like during incubation and a temporal change while a reagent is applied, and of recording a statistical feature and a physical quantity.

Recently, a technology enabling a cell incubation on a stage of a microscope has been developed, and thereby a movement and a temporal change of the cell to which a reagent and the like is applied can be observed in real time. However, the conventional visually-observing method has a difficulty in performing a sufficient observation due to a problem that an increase in the number of observing target, observation frequency, observation range, observation time and the like causes an increase in the burden on an observer. For the solution, a tracking apparatus and a tracking system in which an image of the specimen is captured by a camera and the like, an observation object in the captured image is detected, and a movement and a temporal change of the observation object is automatically tracked have been developed.

As a technology of detecting and tracking an observing target in an image, an object-tracking apparatus which detects an area corresponding to an object as a tracking target from image data, observes and tracks the detected area in time series has been proposed (see Patent Document 1, for example). To deal with the cases where there is a lack in a part of the detected object area, one object is detected as two objects after division, and a plurality of objects are seemingly detected as one object, the object-tracking apparatus checks a change in the number of object over consecutive frames, detects a state change such as a division and a conjugation of the object, and corrects a history of property information based on the detected state change, the property information showing the state of the object.

Patent Document 1: Japanese Patent Application Laid-Open No. H11-32325

### DISCLOSURE OF INVENTION

### PROBLEM TO BE SOLVED BY THE INVENTION

However, since the conventional object-tracking apparatus determines the state change of the object based on the change in the number of the object over consecutive two frames, a state change of three or more adjacent objects cannot be detected accurately. For example when a living cell is to be tracked as the object, there is a problem that an accurate tracking cannot be performed once the cell closes up via the division and growth thereof.

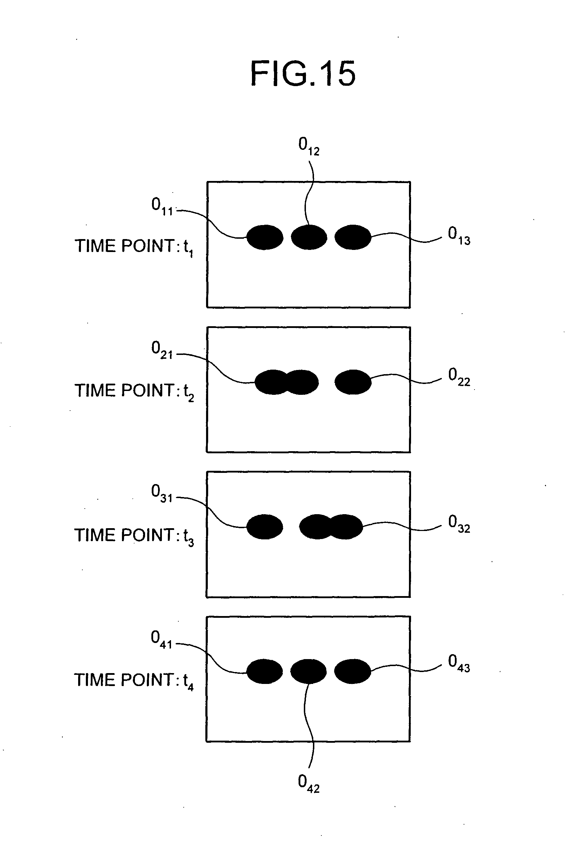

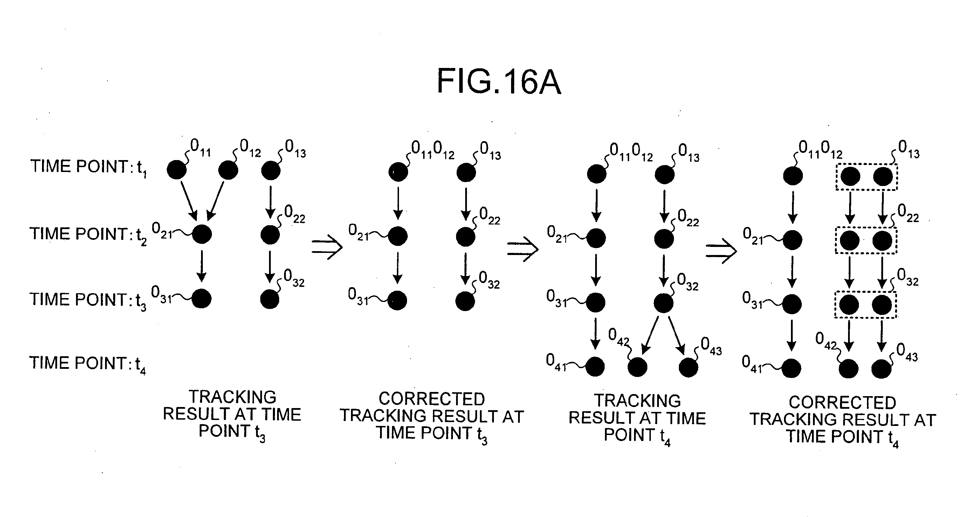

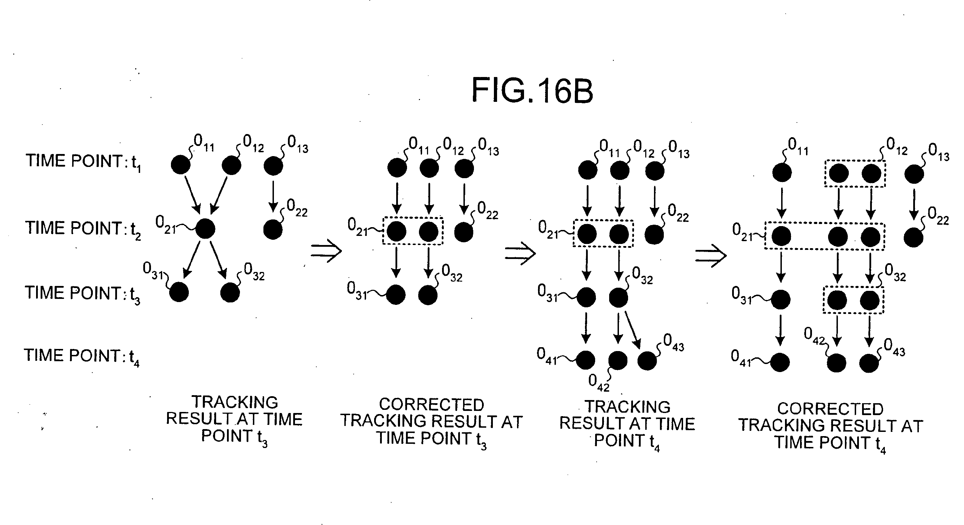

Here, a case where the conventional object-tracking apparatus becomes unable to perform the tracking will be explained. FIG. 15 illustrates object areas detected at time points t₁, t₂, t₃, and t₄ in time sequence. FIGS. 16A and 16B are state transition diagrams respectively illustrating examples of a tracking result based on the detection result shown in FIG. 15. In FIGS. 16A and 16B, a filled circle indicates an area corresponding to each area shown in FIG. 15, and an arrow connecting filled circles shows a correspondence as a tracking result of the area detected at each time point.

As shown in FIG. 15, areas O₁₁, O₁₂, and O₁₃ are detected at time point t₁, areas O₂₁ and O₂₂ are detected at time point t₂, and areas O₃₁ and O₃₂ are detected at time point t₃, respectively, and the correspondence of each area over respective time points is determined based on the detection result to obtain a tracking result at the time point t₃ as shown in FIG. 16A. The tracking result at the time point t₃ shows a transitional state that the areas O₁₁ and O₁₂ corresponds to the area O₂₁ after conjugation, and the area O₂₁ corresponds to the area O₃₁, and a transitional state that the area O₁₃ corresponds to the areas O₂₂ and O₃₂, sequentially. In this case, since the area O₂₁ is determined to correspond to the area O₃₁ without changing the number of area, the separated areas O₁₁ and O₁₂, which were once determined to have transited to the area O₂₁ via conjugation during the period from the time point t₁ to the time point t₂, are corrected to be determined as one area which has already been conjugated at the time point t₁, and then newly recognized to be one area O₁₁O₁₂ as shown in the corrected tracking result at the time point t₃.

Further, when areas O₄₁, O₄₂, and O₄₃ are detected at the time point t₄, a tracking result at the time point t₄ is obtained, showing a transitional state that the area O₃₁ corresponds to the area O₄₁, and the area O₃₂ divides to correspond to the areas O₄₂ and O₄₃. Here, since the area O₃₂ is determined to have divided and transited into two areas, the areas O₁₃, O₂₂, and O₃₂ each of which was once determined to be one area at each of the time points t₁ to t₃ are corrected to be determined as two areas which have already been separated two areas at each time point, and then the area O₂₂ is newly recognized as shown in the corrected tracking result at the time point t₄. Thus, the area tracking ends in an incorrect tracking since the areas O₁₁, O₁₂, and O₁₃ detected at the time point t₁ are to be recorded as different areas O₁₁O₁₂ and O₁₃ in the tracking history.

On the other hand, FIG. 16B shows a tracking result of a case where another correspondence is determined during the period from the time point t₂ to the time point t₃. The tracking result at the time point t₃ in FIG. 16B shows a transitional state that the area O₂₁ divides to correspond to the areas O₃₁ and O₃₂, and the area corresponding to the area O₂₂ disappears during the period from the time point t₂ to the time point t₃. In this case, since the area O₂₁ is determined to have divided and transited into two areas, the area O₂₁ which was once determined to be one area at the time point t₂ is corrected to be determined to have already been two areas at the time point t₂, and the area O₂₁ is newly recognized as shown in the corrected tracking result at the time point t₃.

The tracking result at the time point t₄ in FIG. 16B shows a transitional state that the area O₃₁ is determined to correspond to an area O₄₁, and the area O₃₂ is determined to correspond to areas O₄₂ and O₄₃ after division during the period from the time point t₃ to the time point t₄. Here, since the area O₃₂ is determined to have divided and transited into two areas, the areas O₁₂ and O₃₂, and a counterpart of the area O₂₁ each of which was once determined to be one area at each of the time points t₁ to t₃ are corrected and determined to have been two areas already at the time point t₂, and the areas O₁₂, O₂₁, and O₃₂ are newly recognized as shown in the corrected tracking result at the time point t₄. Thus, the area tracking in this case also ends in an incorrect tracking since the three areas O₁₁, O₁₂, and O₁₃ detected at the time point t₁ are to be recorded as four areas in the tracking history.

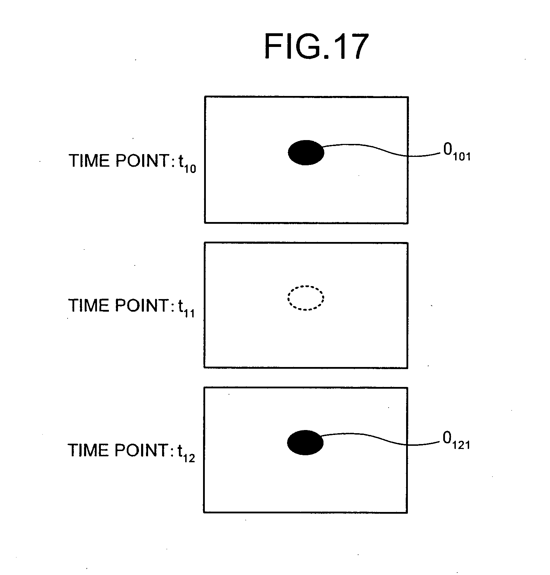

Furthermore, FIG. 17 shows still another example of the case where the tracking ends in failure in the conventional object-tracking apparatus. FIG. 17 illustrates object areas detected at time points t₁₀, t₁₁, and t₁₂ in time series respectively, an area O₁₀₁ detected at the time point t₁₀ not being detected at the time point t₁₁ but being detected again at the time point t₁₂. In this case, since the conventional object-tracking apparatus determines that the object has disappeared at the time point t₁₁ when the corresponding area cannot be detected, a correspondence between the area O₁₀₁ and an area O₁₂₁ is not valid even though the area O₁₂₁ is detected at the same position at the time point t₁₂, resulting in an incorrect area tracking.

The present invention has been achieved in view of the foregoing, and it is an object of the present invention to provide an object-tracking apparatus capable of tracking an imaging target in each of images picked up at multiple time points more precisely, a microscope system, and an object-tracking program.

### MEANS FOR SOLVING PROBLEM

To achieve the object described above, an object-tracking apparatus, as set forth in claim 1, which allows an observation of an object image area corresponding to an imaging target in each of images captured at multiple time points in time series and a tracking of the imaging target, includes: an image acquiring unit that acquires image data of each of the images; an area detector that detects the object image area from each of the images based on the image data acquired by the image acquiring unit; a parameter calculator that calculates an area parameter which indicates a property of the object image area detected by the area detector based on the image data; an area identifying unit that provides the object image area at a processing target time point with an identifier which shows a correspondence between the object image area at the processing target time point and the object image area at an identification time point based on an area parameter indicating a property of the object image area at the processing target time point and an area parameter indicating a property of the object image area at the identification time point, the identification time point being one of a time point before the processing target time point and a time point after the processing target time point; a history generator that associates the identifier provided by the area identifying unit with an area parameter corresponding to the identifier to generate property information for each of the multiple time points, and associates the generated property information of respective time points with time series to generate history information; a consistency determining unit that determines whether the history information from a determination time point to the processing target time point has a consistency based on the property information of each time point from the determination time point to the processing target time point, the determination time point being one of a time point which is predetermined plural time points before the processing target time point and a time point which is predetermined plural time points after the processing target time point; and a history correcting unit that corrects, when the consistency determining unit determines that the history information has no consistency, the history information so as to be consistent from the determination time point to the processing target time point.

In the object-tracking apparatus according to the invention as set forth in claim 2, the area detector detects a plurality of object image areas from each of the images.

In the object-tracking apparatus according to the invention as set forth in claim 3, the area detector detects the object image area from each of the images based on a pixel value of the image data which has a predetermined correspondence with a preset value.

In the object-tracking apparatus according to the invention as set forth in claim 4, the parameter calculator calculates the area parameter which indicates a property of each object image area.

In the object-tracking apparatus according to the invention as set forth in claim 5, the parameter calculator calculates the area parameter which indicates a property of an aggregation of the object image area.

In the object-tracking apparatus according to the invention as set forth in claim 6, the area identifying unit retrieves an area parameter which has a predetermined correspondence with the area parameter at the processing target time point from area parameters at the identification time point, and provides the object image area at the processing target time point with an identifier which shows a coidentity with an object image area corresponding to the retrieved area parameter.

In the object-tracking apparatus according to the invention as set forth in claim 7, the area parameter indicates a position of the object image area in each of the images, and the area identifying unit retrieves, from area parameters at the identification time point, an area parameter indicating a position which corresponds most to the position indicated by the area parameter at the processing target time point, and provides the object image area at the processing target time point with an identifier which shows a coidentity with an object image area corresponding to the retrieved area parameter.

In the object-tracking apparatus according to the invention as set forth in claim 8, the area parameter indicates a position and an area of the object image area in each of the images, and the area identifying unit retrieves, from area parameters at the identification time point, an area parameter indicating a position which corresponds most to the position, within a predetermined range, indicated by the area parameter at the processing target time point and an area which corresponds most to the area indicated by the area parameter at the processing target time point, and provides the object image area at the processing target time point with an identifier which shows a coidentity with an object image area corresponding to the retrieved area parameter.

In the object-tracking apparatus according to the invention as set forth in claim 9, the area parameter indicates a range of the object image area in each of the images, and the area identifying unit retrieves, from area parameters at the identification time point, an area parameter indicating a range which is most widely in common with the range indicated by the area parameter at the processing target time point, and provides the object image area at the processing target time point with an identifier which shows a coidentity with an object image area corresponding to the retrieved area parameter.

In the object-tracking apparatus according to the invention as set forth in claim 10, the area identifying unit, when a plurality of area parameters corresponding to one area parameter at the processing target time point are retrieved at the identification time point as a retrieval result, provides the object image area corresponding to the one area parameter with an identifier which shows a coidentity with object image areas respectively corresponding to the plurality of area parameters.

In the object-tracking apparatus according to the invention as set forth in claim 11, the area identifying unit, when one area parameter corresponding to a plurality of area parameters at the processing target time point is retrieved at the identification time point as a retrieval result, provides each object image area corresponding to each of the plurality of area parameters with an identifier which shows a coidentity with an object image area corresponding to the one area parameter.

In the object-tracking apparatus according to the invention as set forth in claim 12, the area identifying unit retrieves, after providing each of all object image areas at the processing target time point with the identifier, an unsupported object image area from object image areas at the identification time point, the unsupported object image area meaning an object image area which shows no coidentity with any identifier, and the history generator generates, when the area identifying unit retrieves the unsupported object image area, property information by adding unsupported information to property information corresponding to the retrieved unsupported object image area, and generates the history information by treating the generated property information as the property information at the processing target time point.

In the object-tracking apparatus according to the invention as set forth in claim 13, the area parameter indicates a number and a position of the object image area in each of the images, and the consistency determining unit determines whether the history information from the determination time point to the processing target time point has a consistency based on the number and the position indicated by the area parameter at each time point from the determination time point to the processing target time point.

In the object-tracking apparatus according to the invention as set forth in claim 14, the consistency determining unit determines, when the property information of one object image area at each time point after the determination time point to the processing target time point has a plurality of identifiers, that the history information from the determination time point to the processing target time point has no consistency, and the history correcting unit unites each property information at the determination time point, each showing a coidentity with each of the plurality of identifiers, and associates the united property information with the one object image area to correct the history information.

In the object-tracking apparatus according to the invention as set forth in claim 15, the consistency determining unit determines, when the property information of a plurality of object image areas at each time point after the determination time point to the processing target time point has one identifier indicating same correspondence, that the history information from the determination time point to the processing target time point has no consistency, and the history correcting unit divides property information at the determination time point, whose identifier shows a coidentity and the same correspondence, and associates the divided property information with the plurality of object image areas respectively to correct the history information.

In the object-tracking apparatus according to the invention as set forth in claim 16, the consistency determining unit determines, when the property information of each time point after the determination time point to the processing target time point includes a common property information to which the unsupported information is added, that the history information has no consistency, and the history correcting unit deletes the common property information to which the unsupported information is added, of each time point after the determination time point to the processing target time point to correct the history information.

The object-tracking apparatus according to the invention as set forth in claim 17 further includes a division determining unit that determines, based on area parameters respectively of the processing target time point and the identification time point, whether the imaging target has made a division between the processing target time point and the identification time point, and writes, when the imaging target is determined to have made the division, division information indicating a derivation via the division to an area parameter of an object image area corresponding to each imaging target after the division, wherein the area identifying unit provides the object image area, at the processing target time point, corresponding to the area parameter to which the division information is written with an identifier which indicates the derivation via the division and a parent-child relationship with the object image area corresponding to the imaging target before the division.

In the object-tracking apparatus according to the invention as set forth in claim 18, the area parameter indicates an area of the object image area in each of the images and a total pixel value of image data corresponding to the object image area, and the division determining unit determines, with respect to two object image areas each as a processing target at the processing target time point and one object image area as a processing target at the identification time point, whether an area indicated by an area parameter corresponding to each of the two object image areas is within a preset area range; further determines, when each area is determined to be within the area range, whether a value calculated by subtracting a total pixel value indicated by an area parameter corresponding to the one object image area from a summation of pixel values indicated by the area parameters corresponding to the two object image areas is not more than a predetermined value; determines, when the value after the subtraction is determined to be not more than the predetermined value, that the imaging target has made the division between the processing target time point and the identification time point; and writes the division information to the area parameters respectively corresponding to the two object image areas.

In the object-tracking apparatus according to the invention as set forth in claim 19, the area parameter indicates a circularity and an area of the object image area in each of the images, and the division determining unit determines, with respect to two object image areas each as a processing target at the processing target time point and one object image area as a processing target at the identification time point, whether a time point when the circularity indicated by the area parameter corresponding to the one object image area exceeds a predetermined circularity, is present among time points from the identification time point to a first time point which is predetermined plural time points before the identification time point; further determines, when the time point when the circularity exceeds the predetermined degree is determined to be present, whether the circularity indicated by the area parameter corresponding to the one object image area monotonically increases and whether the area indicated by the area parameter corresponding to the one object image area monotonically decreases, respectively in time series, at each time point from an initial time point when the circularity exceeds the predetermined degree to a second time point which is predetermined time points before the initial time point; determines, when the circularity and the area are determined to have monotonically increased and decreased respectively in time series, that the imaging target has made the division between the processing target time point and the identification time point; and writes the division information to the area parameters respectively corresponding to the two object image areas.

In the object-tracking apparatus according to the invention as set forth in claim 20, the area parameter indicates an area corresponding to each of a first element and a second element in the object image area, and the division determining unit determines, with respect to two object image areas each as a processing target at the processing target time point and one object image area as a processing target at the identification time point, whether an area ratio between the area of the first element and the area of the second element, the areas of the first element and the second element being indicated by the area parameter corresponding to the one object image area, is within a preset area ratio range; determines, when the area ratio is determined to be within the area ratio range, that the imaging target has made the division between the processing target and the identification time point; and writes the division information to the area parameters respectively corresponding to the two object image areas.

In the object-tracking apparatus according to the invention as set forth in claim 21, the area parameter indicates a density variance of an area corresponding to a specific element in the object image area, and the division determining unit detects, with respect to two object image areas each as a processing target at the processing target time point and one object image area as a processing target at the identification time point, a local maximum point in the density variance indicated by the area parameter corresponding to the one object image area; determines whether the number of the detected local maximum point is two; determines, when the number of the detected local maximum point is determined to be two, that the imaging target has made the division between the processing target time point and the identification time point; and writes the division information to the area parameters respectively corresponding to the two object image areas.

The object-tracking apparatus according to the invention as set forth in claim 22 further includes a genealogy generator that generates genealogy information in which the parent-child relationship over respective time points is associated with time series based on an identifier which is provided to an object image area corresponding to an area parameter where the division information is written at each time point, and which indicates the derivation via the division and the parent-child relationship.

In the object-tracking apparatus according to the invention as set forth in claim 23, the imaging target is a living cell.

The object-tracking apparatus according to the invention as set forth in claim 24 further includes an imaging unit that performs an intermittent imaging of the imaging target to generate the image data, wherein the image acquiring unit acquires the image data generated by the imaging unit.

A microscope system as set forth in claim 25, having the object-tracking apparatus as set forth in claim 24 includes an imaging optical system that performs a magnifying projection of an image of the imaging target, wherein the imaging unit in the object-tracking apparatus captures an image of the imaging target to generate the image data, the imaging target being magnified and projected on an imaging surface of the imaging optical system by the imaging optical system.

An object-tracking program, as set forth in claim 26, for making an object-tracking apparatus which detects an object image area corresponding to an imaging target in each of images captured at multiple time points and tracks the imaging target in time series, detect the object image area and track the imaging target in time series, the object-tracking program causing the object-tracking apparatus to perform: an image acquiring procedure that acquires image data of each of the images; an area detecting procedure that detects the object image area from each of the images based on the image data acquired in the image acquiring procedure; a parameter calculating procedure that calculates an area parameter which indicates a property of the object image area detected in the area detector based on the image data; an area identifying procedure that provides the object area at a processing target time point with an identifier which shows a correspondence between the object image area at the processing target time point and the object image area at an identification time point based on an area parameter indicating a property of the object image area at the processing target time point and an area parameter indicating a property of the object image area at the identification time point, the identification time point being one of a time point before the processing target time point and a time point after the processing target time point; a history generating procedure that associates the identifier provided in the area identifying procedure with an area parameter corresponding to the identifier to generate property information for each of the multiple time points, and associates the generated property information of respective time points with time series to generate history information; a consistency determining procedure that determines whether the history information from a determination time point to the processing target time point has a consistency based on the property information of each time point from the determination time point to the processing target time point, the determination time point being one of a time point which is predetermined plural time points before the processing target time point and a time point which is predetermined plural time points after the processing target time point; and a history correcting procedure that corrects, when the consistency determining procedure determines that the history information has no consistency, the history information so as to be consistent from the determination time point to the processing target time point.

The object-tracking program according to the invention as set forth in claim 27 further causes the object-tracking apparatus to perform a division determining procedure that determines, based on area parameters respectively of the processing target time point and the identification time point, whether the imaging target has made a division between the processing target time point and the identification time point, and writes, when the imaging target is determined to have made the division, division information indicating a derivation via the division to an area parameter of an object image area corresponding to each imaging target after the division, wherein the area identifying procedure provides the object image area, at the processing target time point, corresponding to the area parameter to which the division information is written with an identifier which indicates the derivation via the division and a parent-child relationship with the object image area corresponding to the imaging target before the division.

The object-tracking program according to the invention as set forth in claim 28 further causes the object-tracking apparatus to perform a genealogy generating procedure that generates genealogy information in which the parent-child relationship over respective time points is associated with time series based on an identifier which is provided to an object image area corresponding to an area parameter where the division information is written at each time point, and which indicates the derivation via the division and the parent-child relationship.

### EFFECT OF THE INVENTION

In the object-tracking apparatus, the microscope system, and the object-tracking program according to the present invention, an imaging target in each of images picked up at multiple time points can be tracked more precisely.

### BRIEF DESCRIPTION OF DRAWINGS

FIG. 1 is a block diagram of a configuration of an object-tracking apparatus and a microscope system according to a first embodiment of the present invention;
FIG. 2 is a flowchart of a processing procedure performed by the object-tracking apparatus shown in FIG. 1;
FIG. 3 illustrates one example of a correspondence between a processing target time point and an identification time point;
FIG. 4 illustrates one example of history information;
FIG. 5 is a flowchart of a processing procedure of a history correction;
FIG. 6A illustrates a processing method of the history correction;
FIG. 6B illustrates another processing method of the history correction;
FIG. 6C illustrates another processing method of the history correction;
FIG. 7 is a block diagram of a configuration of an object-tracking apparatus and a microscope system according to a second embodiment of the present invention;
FIG. 8 is a flowchart of a processing procedure performed by the object-tracking apparatus shown in FIG. 7;
FIG. 9 is a flowchart of a first processing procedure of a cell-division determination;
FIG. 10 is a flowchart of a second processing procedure of the cell-division determination;
FIG. 11 is a flowchart of a third processing procedure of the cell-division determination;
FIG. 12 is a flowchart of a fourth processing procedure of the cell-division determination;
FIG. 13 illustrates an example of displaying a processing result of the object-tracking apparatus shown in FIG. 7;
FIG. 14 illustrates another example of displaying a processing result of the object-tracking apparatus shown in FIG. 7;
FIG. 15 illustrates an example of a detection result of an object by a conventional object-tracking apparatus;
FIG. 16A illustrates an example of a tracking result of an object by the conventional object-tracking apparatus;
FIG. 16B illustrates another example of a tracking result of an object by the conventional object-tracking apparatus; and
FIG. 17 illustrates an example of a detection result of an object by the conventional object-tracking apparatus.

### EXPLANATIONS OF LETTERS OR NUMERALS

- 1, 11: OBJECT-TRACKING APPARATUS
- 2, 12: IMAGE PROCESSOR
- 2a: IMAGE PROCESSING CONTROLLER
- 2b: IMAGE BUFFER
- 2c: IMAGE ACQUIRING UNIT
- 2d: AREA DETECTOR
- 2e: PARAMETER CALCULATOR
- 2f: AREA IDENETIFYING UNIT
- 3: IMAGING UNIT
- 4, 14: CONTROL UNIT
- 4a: HISTORY GENERATOR
- 4b: CONSISTENCY DETERMINING UNIT
- 4c: HISTORY CORRECTING UNIT
- 5, 15: STORAGE UNIT
- 5a: HISTORY STORING UNIT
- 6: INPUT UNIT
- 7: DISPLAY UNIT
- 8: COMMUNICATION UNIT
- 12g: CELL-DIVISION DETERMINING UNIT
- 14d: GENEALOGY GENERATOR
- 15b: GENEALOGY STORING UNIT
- OB: OBJECT
- OP: IMAGING OPTICAL SYSTEM

### BEST MODE(S) FOR CARRYING OUT THE INVENTION

A first embodiment of an object-tracking apparatus, a microscope system, and an object-tracking program according to the present invention will be explained in detail below with reference to the accompanying drawings. It should be noted that the first embodiment does not limit the invention. The same components are provided with the same reference symbols in the description throughout the drawings.

### First embodiment

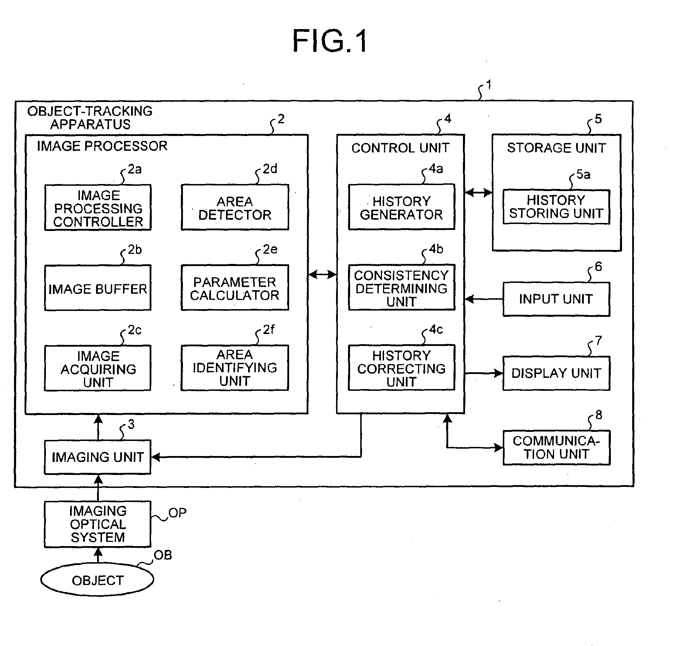

An object-tracking apparatus, a microscope system, and an object-tracking program according to a first embodiment of the present invention will be explained. FIG. 1 is a block diagram of a configuration of an object-tracking apparatus and a microscope system according to the first embodiment. As shown in FIG. 1, an object-tracking apparatus 1 according to the first embodiment includes an image processor 2 which analyzes and processes image data generated by an imaging unit 3; the imaging unit 3 which captures an image of an object OB to generate the image data; a control unit 4 which controls entire processing and operation of the object-tracking apparatus 1; a storage unit 5 which stores various types of information such as a tracking result; an input unit 6 which inputs various types of information; a display unit 7 which displays various types of information such as image information; and a communication unit 8 which performs communication of various types of information with an external device. The image processor 2, the imaging unit 3, the storage unit 5, the input unit 6, and the communication unit 8 are electrically connected to the control unit 4, which controls each of those components.

An imaging optical system OP condenses a light from the object OB and performs a magnifying projection of the image of the object OB on an imaging surface. The microscope system according to the first embodiment includes the imaging optical system OP, the object-tracking apparatus 1, and an illumination device, not shown, for illuminating the object OB.

The image processor 2 includes an image processing controller 2a which controls various image processings on image data acquired by the imaging unit 3; an image buffer 2b which temporarily stores the image data to be processed; an image acquiring unit 2c that acquires image data of an image of the object OB from the imaging unit 3; an area detector 2d that detects an object area as an object image area corresponding to the tracking target from the image of the object OB based on the image data; a parameter calculator 2e that calculates an area parameter representing a property of the object area based on the image data; and an area identifying unit 2f that provides the object area at a processing target time point with an identifier which shows a correspondence between the object area at the processing target time point and an object area at an identification time point which is before or after the processing target time point. The area detector 2d, the parameter calculator 2e, and the area identifying unit 2f process the image data based on an instruction from the image processing controller 2a, and properly outputs the image data, the object area, the area parameter, the identifier, various processing parameters, and the like as a result of processing, to the control unit 4. The image processing controller 2a may control various image processings such as a gamma correction, a Y/C separation (Y signal/Color signal separation), and a color conversion with respect to the acquired image data.

The image acquiring unit 2c acquires image data to be generated whenever an image is captured by the imaging unit 3, and sequentially outputs to the image buffer 2b. The image buffer 2b rewrites image data whenever image data is input to the image acquiring unit 2c, and keeps the latest image data at all times. The image acquiring unit 2c may record the acquired image data in the storage unit 5.

The imaging unit 3 is realized by using a solid-state imaging device such as a CCD and a CMOS, and an A/D converter. The imaging unit 3 uses the solid-state imaging device to detect an image of the object OB which is magnified and projected by the imaging optical system OP, converts the image to an electric signal as an analog signal, uses the A/D converter to convert the analog signal to a digital signal, and outputs the converted digital signal to the image processor 2 as image data of the image of the object OB. The image data generated by the imaging unit 3 may be arbitrary data format as long as the image data allows identifying the image of the object OB, for example a monochrome image data, color image data, color-difference signal data, and the like.

The control unit 4 is realized by a CPU and the like which executes a processing program stored in the storage unit 5, and controls various processings and operations performed by the components of the object-tracking apparatus 1. Specifically, the control unit 4 executes the processing program stored in the storage unit 5, which is an object-tracking program for detecting an object area corresponding to a desired tracking target from images of the object OB in time series and for tracking the tracking target, and controls components relevant to the processing of this program.

The control unit 4 includes a history generator 4a, a consistency determining unit 4b, and a history correcting unit 4c. The history generator 4a associates the identifier provided by the area identifying unit 2f with the area parameter corresponding to the identifier to generate property information, and associates the generated property information of each time point with time series to generate history information. The consistency determining unit 4b determines whether or not there is a consistency in the history information from a determination time point which is a time point a predetermined plural time points before or after the processing target time point, to the processing target time point based on the property information of each time point from the determination time point to the processing target time point. When the consistency determining unit 4b determines there is no consistency in the history information, the history correcting unit 4c corrects the history information so that the history information from the determination time point to the processing target time point is consistent.

The control unit 4 may be configured to control the imaging optical system OP, the illumination device for illuminating the object OB, and the like so that the projection optical system OP performs various settings such as focusing, zooming, and aperture in magnifying and projecting the image of the object OB.

The storage unit 5 is realized by using a ROM and a RAM, the ROM storing a program for starting a predetermined operating system, various processing programs and the like in advance, and the RAM storing processing parameters of various processings controlled by the control unit 4, various information and the like to be input to/output from the components. Specifically, the storage unit 5 stores the object-tracking program executed by the control unit 4. The storage unit 5 includes a history storing unit 5a which stores history information generated by the history generator 4a and corrected by the history correcting unit 4c. In addition, the storage unit 5 stores data of an image captured by the imaging unit 3, image data processed by the image processor 2, the identifier, the area parameter, and the like.

The input unit 6 is realized by a switch, an input key, a touch screen, and the like of various kinds, and receives an input of instruction information of various processings and operations controlled by the control unit 4 from the outside to output to the control unit 4. The input unit 6 may be configured to receive an input of audio information by having a microphone and the like.

The display unit 7 includes a display device using a liquid crystal display, an organic EL (electroluminescence) display, an LED display device, and the like to display various information such as image information. Specifically, the display unit 7 displays image data processed by the image processor 2, image data which corresponds to property information, history information, and the like generated and corrected as a tracking result of the object, and numeric information. The display unit 7 may also be configured to display announcement information which announces a start and an end of the processings and operations controlled by the control unit 4, error information which announces errors occurring in the processings and operations, and the like. The display unit 7 may further include a speaker and the like to output audio information such as an announcement sound or an alert sound with respect to the announcement information and the error information.

The communication unit 8 is realized by using a communication interface such as RS232C, USB, IEEE1394, SCSI, and, or an infrared-ray communication interface in conformity to the IrDA standard, and the like, and performs communication of various types of information such as image information, numeric information, instruction information, audio information, and the like with an external device.

The imaging optical system OP and the illumination device not shown are realized by a microscope of various types, such as a biologic microscope, an industrial microscope, and a stereoscopic microscope, and can deal with various types of observation methods such as a bright-field observation, a dark-field observation, a fluorescence observation, a phase-contrast observation, a differential interference observation, a polarization observation, a laser beam observation, and an evanescent light observation. The imaging optical system OP may be realized by an arbitrary device, such as a digital camera and a movie camera, capable of capturing a digital image.

The object OB observed by the microscope system according to the first embodiment is, for example, a specimen of a living tissue, and the tracking target to be tracked by the object-tracking apparatus 1 is a cell in the specimen. The cell as the tracking target is stained with a fluorescent dye and the like. The cell may be stained in whole, and only a particular portion such as a cell nucleus, an actin, and a cell membrane may be stained. The purpose of staining the cell is to make the cell observation easier, and thereby the cell portion whose pigment is affected by the staining can be observed clearly. The staining dye used for such a cell staining is not limited to the fluorescent dye, and may be any arbitrary staining dye as long as the dye makes the contrast of the image as the tracking target clearer without deteriorating the property of the object OB. The tracking target may not necessarily be one kind, and may be mixed objects of plural kinds having different sizes and shapes respectively. The tracking target is not limited to the living cell, and may be a human being, an animal, an organism, a vehicle, and the like as long as the object has a general material body.

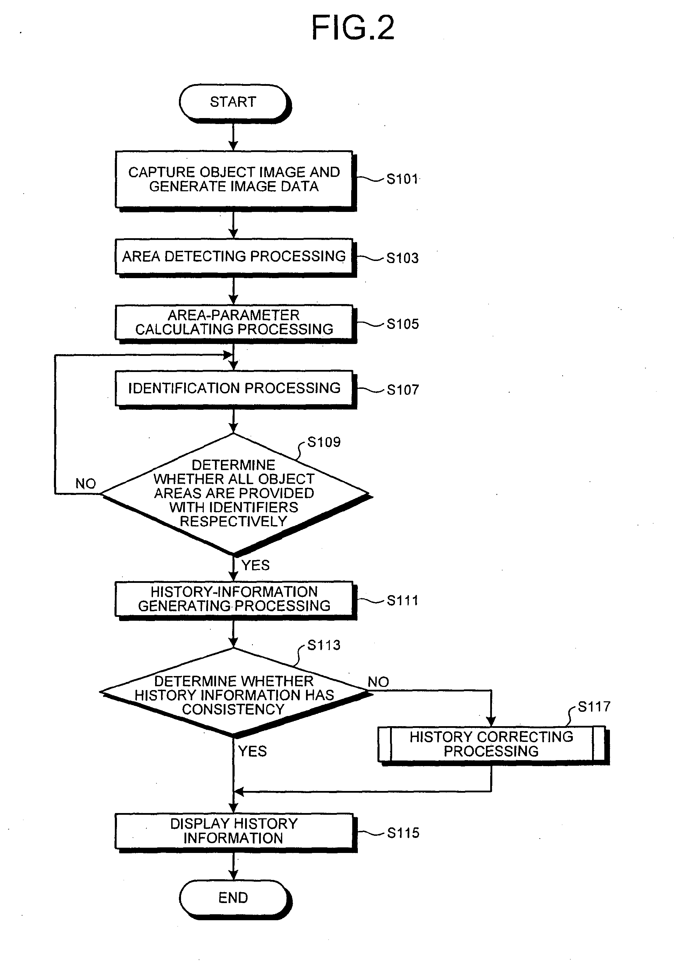

Next, a processing and an operation performed by the object-tracking apparatus 1 will be explained. FIG. 2 is a flowchart of a processing procedure performed by the object-tracking apparatus 1. As shown in FIG. 2, when the control unit 4 executes the object-tracking program, the imaging unit 3 captures the image of the object OB, generates image data of the captured image, and outputs the data to the image processor 2 (step S101). The area detector 2d performs an area detecting processing for detecting an object area corresponding to the tracking target from the captured image based on pixel values constituting the image data (step S103), the parameter calculator 2e performs an area-parameter calculating processing for calculating area parameters which respectively indicate properties of the detected object areas (step S105), and the area identifying unit 2f performs an identifying processing for providing each object area of the processing target time point with an identifier by referring to the area parameters of the processing target time point and of the identification time point, respectively (step S107), determines whether all the object areas are provided with the identifiers, respectively (step S109), and continues the identifying processing when all the object areas are not provided with the identifiers ("No" at step S109).

When all the object areas at the processing target time point are provided with the identifiers ("Yes" at step S109), the history generator 4a associates the identifier of each object area acquired by the image processor 2 with the area parameter to generate property information, and performs a history information generating processing for generating history information by associating the property information at each time point with time series (step S111). Then, the consistency determining unit 4b determines whether the history information from the determination time point to the processing target time point has a consistency (step S113). When the history information is determined to have the consistency ("Yes" at step S113), the control unit 4 controls the display unit 7 to display various processing results such as history information (step S115), and ends the series of processings. On the other hand, when the history information is determined to have no consistency ("No" at step S113), the history correcting unit 4c performs a history correcting processing for correcting the history information from the determination time point to the processing target time point (step S117), and the control unit 4 executes step S115 to end the series of processings.

The image processing controller 2a suitably outputs the information generated in each processing step performed by the image processor 2 to the control unit 4, and the control unit 4 suitably stores the information acquired from the image processor 2 and the information generated in the control unit 4 in the storage unit 5. The control unit 4 repeats the series of processing procedure shown in FIG. 2 until the processing reaches a preset number of times, a preset processing time, and the like, or information which instructs to end or interrupt the processing is input by the input unit 6 or the communication unit 8. The control unit 4 may perform the processing from step S103 based on the image data captured and stored in advance. In this case, the processing from step S103 may be repeated until all pieces of image data is processed.

The area detector 2d detects the object area based on a variance of the pixel values constituting the image data at step S103. The area detector 2d, for example, compares each pixel value in the image data with a preset threshold. When the pixel value is larger than the threshold, the area detector 2d sets "1" at the corresponding pixel position, and when the pixel value is smaller than the threshold, the area detector 2d sets "0" at the corresponding pixel position. The area detector 2d thereby generates a binary image to detect an aggregation of pixels to which "1" is set as the object area.

The threshold used for the comparison may be a fixed value, and may be set appropriately via the discriminant analysis method, based on an average value of the pixel values of the entire image data or a variance of the pixel values. The value set at each pixel position according to the result of the comparison between each pixel value and the threshold is not limited to "1" and "0", and may be arbitrarily set by codes using alphabets, symbols, and the likes as long as the value allows a discrimination of whether or not each pixel value is larger than the threshold. Further, the area detector 2d may be configured to generate the binary image based on the difference or ratio between each pixel value and the threshold. Except for the method of generating the binary image, the object area may be detected by using the known region splitting method such as a watershed in which a region is divided based on the luminance variance of an image, alternatively.

The parameter calculator 2e calculates, as area parameters, numeric values for the size, shape, position, luminance, color, ratio between areas, number of areas, aggregation of areas, and the like with respect to the object area detected by the area detector 2d. The parameter calculator 2e may calculate, as the area parameters, numeric values indicating one-dimensional property such as a line profile, or numeric values indicating three-dimensional property such as the luminance variance, not limiting to the numeric values indicating such a two-dimensional property. With reference to the area parameter, the aggregation, spread, contact condition, colony, and the like of the cells can be recognized.

Here, the numeric value for the area size is the area, length, width, maximum diameter, minimum diameter, average diameter, maximum radius, minimum radius, average radius, perimeter, envelope perimeter, elliptic perimeter, major axis length, minor axis length, maximum Feret diameter, minimum Feret diameter, average Feret diameter, area ratio of object and bounding box, convex perimeter, and the like. The numeric value for the area shape is the fineness ratio, radius ratio, circularity, Euler number, oblateness, fractal dimension, number of branches, number of end-point node, degree of roughness, and the like. The numeric value for the area position is the center of gravity, position of bounding box, angle, and the like. The numeric value for the area luminance and color is the maximum pixel value, minimum pixel value, average pixel value, sum of pixel value, variance, standard deviation, integrated optical density, degree of aggregation, inhomogeneity, margination, and the like. Further, the numeric value for the number of areas is the number of areas, holes, and the like. The numeric value for the area aggregation is the area class, maximum distance between areas, minimum distance between areas, average distance between areas, relative distance, variance, chemotaxis, and the like.

The area identifying unit 2f refers to the property information of each object area detected at an identification time point which is one time point before the current time point as the processing target time point, and sets the identifier to each object area detected at the processing target time point. At this time, the area identifying unit 2f associates object areas located at the most corresponding position to each other within a range preset in advance, and provides the object areas with the same identifier. In other words, the area identifying unit 2f refers to the position indicated by the area parameter corresponding to the object area as the current processing target, retrieves the area parameter indicating a position which corresponds the most to the position among the area parameters at the identification time point, and provides the object area at the processing target time point with the same identifier provided to the object area at the identification time point, the object area at the identification time point corresponding to the area parameter as the search result. The identifier is not limited to an identifier which is exactly the same with each other, and may be any identifier which indicates coidentity.

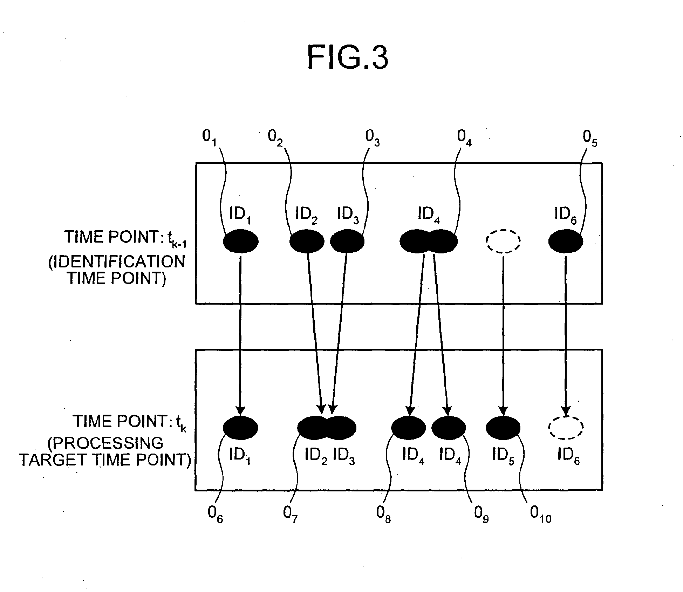

FIG. 3 illustrates one example of a correspondence between object areas detected at the processing target time point and object areas detected at the identification time point. In FIG. 3, the processing target time point is shown as a time point tₖ, the identification time point is shown as a time point tₖ₋₁, and the correspondences between the object areas at the processing target time point and the object areas at the identification time point are shown with arrows, respectively. In this example when an object area O₆ at the time point tₖ is the processing target, the area identifying unit 2f retrieves an object area O₁ at the time point tₖ₋₁ located at the most corresponding position to the object area O₆ within a predetermined range including the position of the object area O₆, and provides the object area O₆ with the same identifier ID₁ as the object area O₁.

When an object area O₇ at the time point tₖ is the processing target, the area identifying unit 2f retrieves object areas O₂ and O₃ at the time point tₖ₋₁ located at the most corresponding position to the object area O₇, and provides the object area O₇ with the same identifiers ID₂ and ID₃ together as the two object areas O₂ and O₃. As a result, an identifier ID₂ID₃ which is a combination of the two identifiers ID₂ and ID₃ is provided to the object area O₇.

Further, when object areas O₈ and O₉ at the time point tₖ are the processing target, the area identifying unit 2f retrieves an object area O₄ with respect to the object area O₈ and provides the object area O₈ with the same identifier ID₄ as the object area O₄, and also retrieves the object area O₄ with respect to the object area O₉ and provides the object area O₉ with the same identifier ID₄. Alternatively, the area identifying unit 2f may provide the object area O₉ with another identifier indicating coidentity with the identifier ID₄, for example, an identifier ID₄' since the identifier ID₄ is already provided to the object area O₈. When the same identifier ID₄ is provided to the two object areas O₈ and O₉, these object areas may be identified with reference to the area parameters.

When an object area O₁₀ at the time point tₖ is the processing target, the area identifying unit 2f provides the object area O₁₀ with an identifier ID₅ which is unique and not contained in property information at any time point since the object area corresponding to the object area O₁₀ cannot be found among the object areas at the time point tₖ₋₁.

Furthermore, the area identifying unit 2f retrieves object areas at the time point tₖ₋₁ after providing all the object areas at the time point tₖ with identifiers, respectively. When an object area O₅ which has no correspondence and no coidentity with any object area at the time point tₖ, the area identifying unit 2f outputs this information to the control unit 4. In this case, the history generator 4a generates new property information into which unsupported information indicating no coidentity at the time point tₖ is additionally written into the area parameter of the object area O₅, and associates the new property information with the history information at the time point tₖ as the property information at the time point tₖ. Accordingly, the new property information inherits an identifier ID₆ provided to the object area O₅.

For the information written as the unsupported information, an area number as the parameter information is preferably rewritten to "0", for example, and alphabets, symbols, and the like may be used for rewriting except for the "0". Though the identifier in FIG. 3 is shown by using alphabets and numerals like ID₁ to ID₆, the identifier is not limited to this example, and may be shown by using other marks and the like.

At step S107, the area identifying unit 2f respectively provides all of the object areas at the processing target time point with identifiers which indicate the correspondence with the object areas at the identification time point, so that an accurate tracking can be performed even though a division, a conjugation, an extinction, and the like occur in the object areas between the time points. Here, though an object area at the identification time point located at a position, within the preset range, corresponding most to the object area at the processing target time point is retrieved, the configuration is not limited to this. For example, an area parameter at the identification time point which indicates not only a position within a predetermined range from the position of the object area of the processing target but also an area most similar to the area indicated by the area parameter of the object area of the processing target may be retrieved, and an identifier indicating the coidentity with the object area corresponding to the area parameter at the identification time point may be provided to the object area of the processing target.

When the area parameter indicates a range which is occupied by the object area, the area identifying unit 2f may search an area parameter at the identification time point which indicates a range most widely in common with the range indicated by the area parameter of the object area of the processing target, and provides the object area of the processing target with an identifier indicating the coidentity with the object area corresponding to the retrieved area parameter.

Here, though the identification time point is configured to be a time point before the processing target time point, the relationship of being before or after between the processing target time point and the identification time point is for the case of performing an identifying processing. For example, the relationship may be reverse in the relationship with the time point of the image capture by the imaging unit 3. In other words, when the identification processing is performed in synchronization with the image capture by the imaging unit 3, the identification time point corresponds to the imaging time point before the processing target time point. When the identification processing is performed based on the image data captured and stored in advance, tracking of the object area is performed by going back in the imaging time points sequentially from the image lastly captured, so that the identification time point corresponds to the imaging time point after the processing target time point.

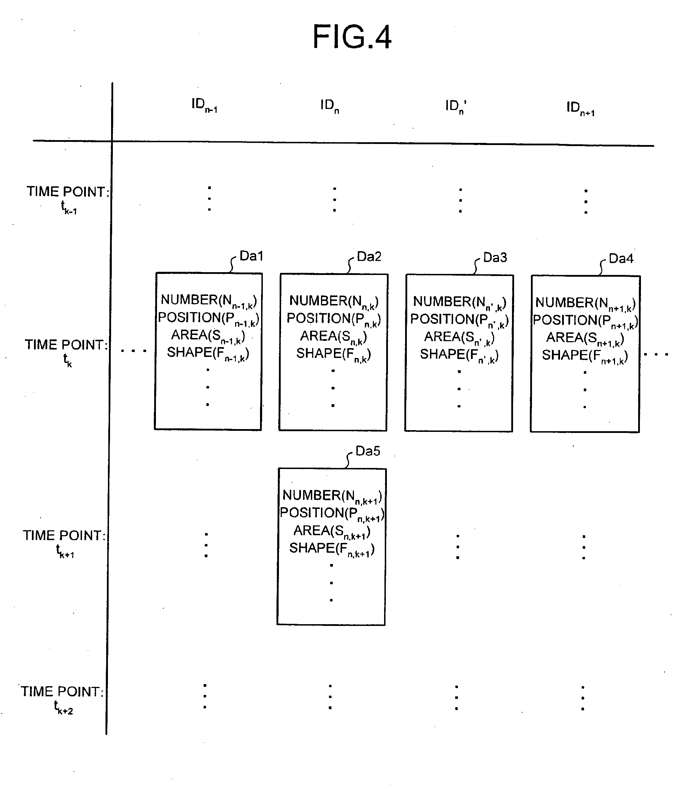

At step S111, the history generator 4a associates the area parameter with the identifier in each object area at the processing target time point to generate property information, and associates, in time series, each piece of generated property information at the processing target time point with the history information which is before the processing target time point and stored in the history storing unit to generate new history information until the processing target time point. In this way, the history generator 4a arranges property information in a table where the horizontal heading shows identifier information and the vertical heading shows time point information, and generates history information as shown in FIG. 4, for example. In the history information shown in FIG. 4, an area parameter corresponding to an identifier IDₙ₋₁ at the time point tₖ is, for example, shown as Da1, and other area parameters Da2 to Da5 are respectively arranged in the similar way. In this case, every time when the history generator 4a acquires an area parameter and an identifier at the processing target time point, the history generator 4a adds the area parameter in a bottom end or an upper end of the table shown in FIG. 4 to generate the history information at the processing target time point.

The consistency determining unit 4b refers to the history information generated by the history generator 4a from the determination time point to the processing target time point, and determines whether or not the history information therebetween has a consistency at step S113. At this time, the consistency determining unit 4b determines whether or not the history information from the determination time point to the processing target time point has a consistency based on: whether a plurality of identifiers are provided to one object area in common (condition 1); whether one identifier is provided to a plurality of object areas (condition 2); or whether property information to which the unsupported information is written is present in common (condition 3) with respect to the property information of each time point except for the determination time point in the history information. When the property information corresponding to any one of the conditions 1 to 3 is recorded, the consistency determining unit 4b determines that there is no consistency. When it is determined that there is no consistency in the history information at step S113, the history correcting unit 4c corrects the history information from the determination time point to the processing target time point at step S117.

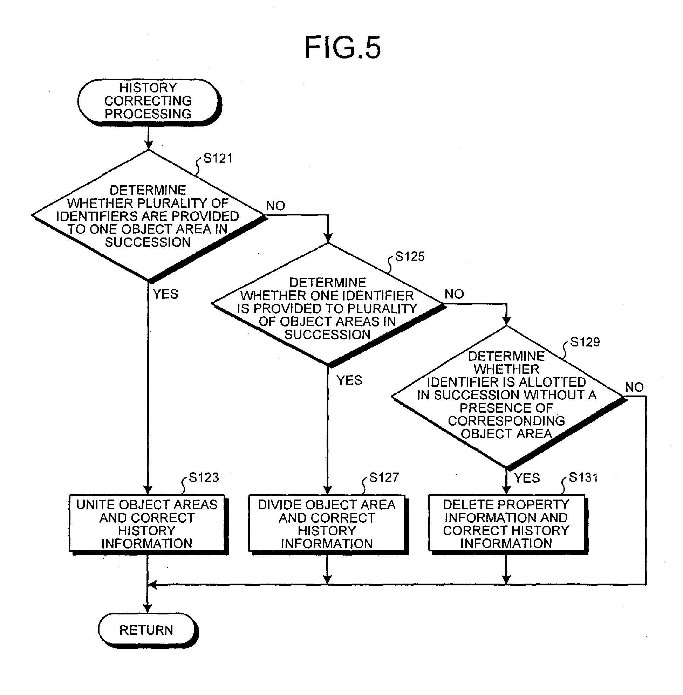

Here, a history correcting processing at step S117 performed by the history correcting unit 4c will be explained. FIG. 5 is a flowchart of a processing procedure of the history correction. As shown in FIG. 5, the history correcting unit 4c determines whether the condition 1 is satisfied, i.e., whether a plurality of identifiers are provided to one object area in succession (step S121). When such identifiers are provided ("Yes" at step S121), the history correcting unit 4c unites object areas corresponding to the plurality of identifiers and corrects the history information (step S123), and the processing returns to step S117.

When the condition 1 is not satisfied ("No" at step S121), the history correcting unit 4c determines whether the condition 2 is satisfied, i.e., whether one identifier is provided to a plurality of object areas in succession (step S125). When the identifier is provided in such a way ("Yes" at step S125), the history correcting unit 4c divides the object area corresponding to the one identifier and corrects the history information, and the processing returns to step S117.

When the condition 2 is not satisfied ("No" at step S125), the history correcting unit 4c determines whether the condition 3 is satisfied, i.e., whether an identifier is only allotted in succession without a presence of the area corresponding thereto (step S129). When such an identifier is allotted ("Yes" at step S129), the history correcting unit 4c deletes the property information corresponding to the identifier and corrects the history information (step S131), and the processing returns to step S117. On the other hand, when the condition 3 is not satisfied ("No" at step S129), the history correcting unit 4c does not correct the history information, and the processing returns to step S117.

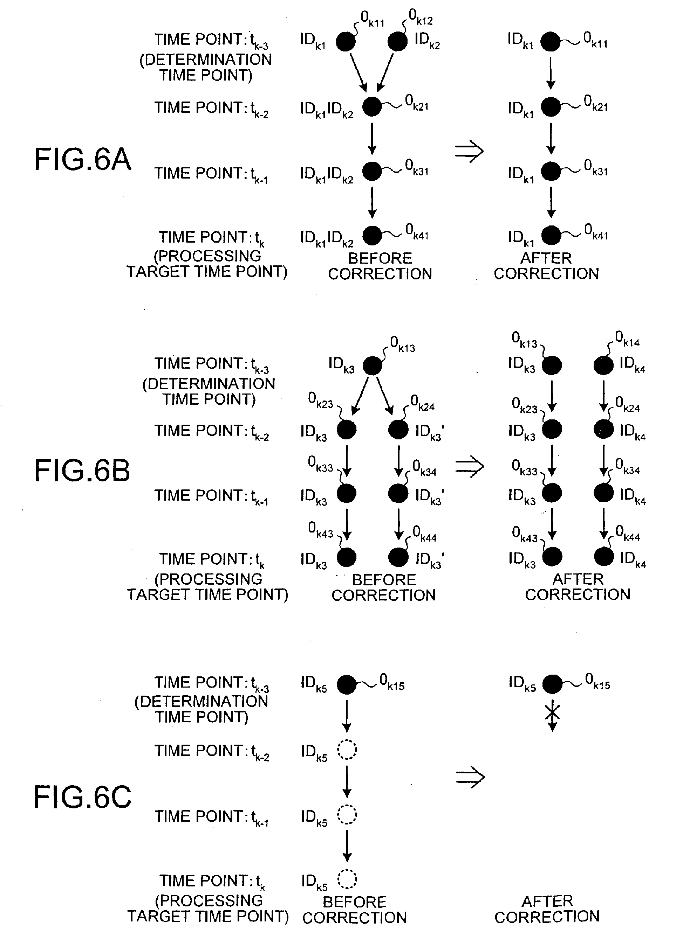

When the condition 1 is satisfied, the history correcting unit 4c determines for correction that the plurality of object areas at the determination time point corresponding to the plurality of identifiers which are provided in succession to one object area in common are actually one area, thereby unites the plurality of areas at the determination time point, and corrects the history information according to the unification at step S123. For example as shown in FIG. 6A, when object areas Oₖ₂₁, Oₖ₃₁, and Oₖ₄₁ respectively of time points tₖ₋₂, tₖ₋₁, and tₖ which are after the a time point tₖ₋₃ as the determination time point, have an identifier IDₖ₁IDₖ₂ which means having a plurality of identifiers, the history correcting unit 4c unites two object areas Oₖ₁₁ and Oₖ₁₂ at the time point tₖ₋₃ into one object area Oₖ₁₁ which has an identifier IDₖ₁, changes the identifier of the object areas Oₖ₂₁, Oₖ₃₁, and Oₖ₄₁ to the IDₖ₁, and corrects the history information accordingly.

When the condition 2 is satisfied, the history correcting unit 4c determines for correction that one object area at the determination time point corresponding to one identifier which is provided to a plurality of object areas in succession after the determination time point is actually plural areas, thereby divides a plurality of areas at the determination time point, and corrects the history information according to the division at step S127. For example as shown in FIG. 6B, when each of object areas Oₖ₂₃, Oₖ₃₃, and Oₖ₄₃ respectively of time points tₖ₋₂, tₖ₋₁, and tₖ has an identifier IDₖ₃, and each of object areas Oₖ₂₄, Oₖ₃₄, and Oₖ₄₄ has an identification IDₖ₃' which means a coidentity with the identifier IDₖ₃, the history correcting unit 4c divides one object area Oₖ₁₃ at the time point tₖ₋₃ into an object area Oₖ₁₃ having the identifier IDₖ₃ and an object area Oₖ₁₄ having an identifier IDₖ₄, changes the identifier of the object areas Oₖ₂₄, Oₖ₃₄, and Oₖ₄₄ to the ID_{K4}, and corrects the history information accordingly.

Further, when the condition 3 is satisfied, the history correcting unit 4c determines for correction that an object area at the determination time point corresponding to an identifier which is allotted in succession without a presence of the corresponding object area actually disappeared after the determination time point, thereby deletes property information corresponding to this disappearance, and corrects the history information according to the deletion at step S131. For example as shown in FIG. 6C, when an identifier IDₖ₅ is allotted at each of time points tₖ₋₂, tₖ₋₁, and tₖ without a presence of the corresponding object area, the history correcting unit 4c determines that the object area Oₖ₁₅ at the time point tₖ₋₃ disappeared at and after the time point tₖ₋₂, deletes the property information corresponding to the IDₖ₅ at and after the time point tₖ₋₂, and corrects the history information accordingly.

Here, the determination time point is explained as being three time points before the processing target time point. However, the present invention is not limited to this, and may be set two, four, or more time points before the processing target time point.

On the other hand, the display unit 7 displays the history information corrected by the history correcting unit 4c as image information and numeric information at step S115 shown in FIG. 2. At this time, the display unit 7 may display the object area based on the image data processed by the image processor 2. Preferably, the display unit 7, for easy discrimination of each object area, displays object areas so as to be discriminable with each other based on the luminous intensity, color, hatching, and the like; displays the contour of each object area with various lines such as a solid line, a broken line, and the like; or displays the barycentric position of each object area with a predetermined mark. More preferably, the display unit 7 provides object areas having the identifier indicating the coidentity at each time point with the same coloring or hatching, so that the shape and the like of each object area at each time point can be discriminably displayed, for example. Moreover, the display unit 7 preferably displays numeric information by making a graph of the numeric value, for example, by plotting a diagram or making a bar chart of the area parameter of each time point with respect to each time point.

The display unit 7 may display the image information and the numeric information at the same time; displays one of the image information and the numeric information; displays the image information and the numeric information alternately via a switch-over therebetween; and the like. Moreover, the display unit 7 may perform a special processing, for example, of emphasizing a designated object area in the displayed image based on instruction information input by an operator via the operation of a mouse as the input unit 6, and displaying all the area parameters with respect to the designated object area as the numeric information.

As explained above, in the object-tracking apparatus, the microscope system, and the object-tracking program according to the first embodiment, the area identifying unit 2f refers to area parameters respectively of the processing target time point and the identification time point to provide each object area at the processing target time point with an identifier; the history generator 4a associates the area parameter with the identifier for each object area at the processing target time point to generate property information, and associates the generated each piece of the property information at the processing target time point with time series to generate history information; the consistency determining unit 4b refers to the history information from the determination time point to the processing target time point, and determines whether the history information therebetween has a consistency; and the history correcting unit 4c corrects the history information from the determination time point to the processing target time point when the determination shows no consistency. Therefore, when the tracking target is an object which divides or grows, such as a living cell, an accurate tracking of the tracking target can be performed even though a division of an area corresponding to the tracking target, a conjugation of a plurality of areas into one, a temporary extinction of the area, and the like occur.

### Second embodiment

Next, a second embodiment will be explained. In the first embodiment described above, the history information is generated by making the property information of each time point of the object area associated with time series. Further, the second embodiment is configured to obtain information about a parent-child relationship which arises due to a cell division of a cell as a tracking target, and generate genealogy information corresponding to the history information.

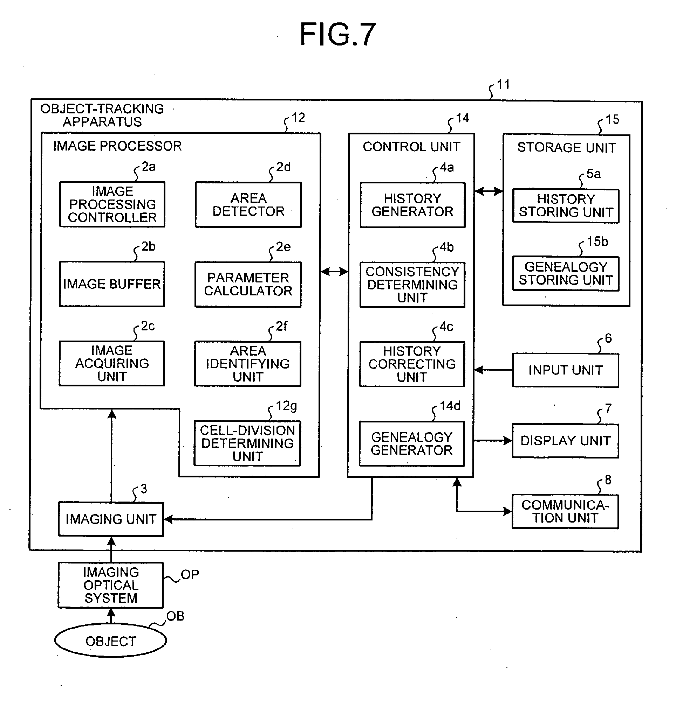

FIG. 7 is a block diagram of a configuration of an object-tracking apparatus and a microscope system according to the second embodiment of the present invention. As shown in FIG. 7, an object-tracking apparatus 11 according to the second embodiment includes an image processor 12, a control unit 14, and a storage unit 15 in place of the image processor 2, the control unit 4, and the storage unit 5 respectively of the object-tracking apparatus 1. The image processor 12 includes a cell-division determining unit 12g further to the image processor 2, the control unit 14 includes a genealogy generator 14d further to the control unit 4, and the storage unit 15 includes a genealogy storing unit 15b further to the storage unit 5. Other components are in common with the first embodiment, and the same components are provided with the same references.

The cell-division determining unit 12g refers to area parameters respectively of the processing target time point and the identification time point, and determines whether the cell as the tracking target causes a cell division between the time points. When it is determined that the cell division has occurred, the cell-division determining unit 12g writes cell-division information indicating that the cell is derived via the cell division to the area parameter of each object area corresponding to the cells after division.

The genealogy generator 14d refers to the identifier provided by the area identifying unit 2f based on the cell-division information to generate genealogy information of the cell division in which an intergenerational relation of each cell over a plurality of time points is associated with time series. Here, information of a cell having the parent-child relationship over at least two generations is treated as the genealogy information, and the information of the parent-child relationship over two generations is the minimum unit of genealogy information. The genealogy information generated by the genealogy generator 14 is stored in the genealogy storing unit 15b.

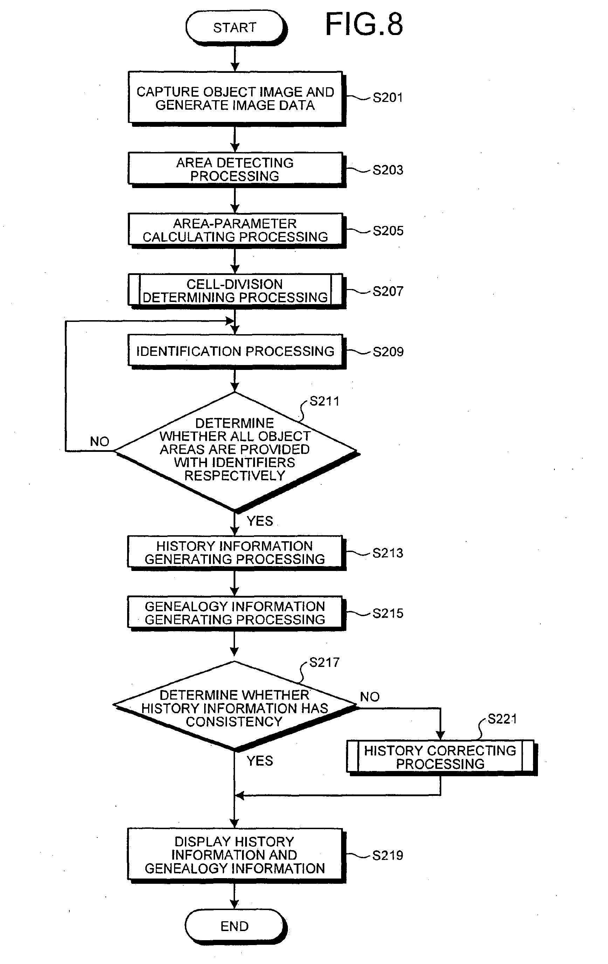

Next, a processing and an operation performed by the object-tracking apparatus 11 will be explained. FIG. 8 is a flowchart of a processing procedure performed by the object-tracking apparatus 11. As shown in FIG. 8, when the control unit 14 executes the object-tracking program, the imaging unit 3, the area detector 2d, and the parameter calculator 2e perform steps S201 to S205 similarly to steps S101 to S105 shown in FIG. 2. The cell-division determining unit 12g refers to area parameters respectively of the processing target time point and the identification time point to perform a cell-division determining processing in which whether or not the cell division has occurred is determined (step S207). The area identifying unit 2f and the history generator 4a perform steps S209 to S213 similarly to steps S107 to S111. The genealogy generator 14d associates the identifier indicating the occurrence of the cell division at each time point with time series to perform a genealogy information generating processing for generating the genealogy information (step S215). The consistency determining unit 4b and the history correcting unit 4c perform steps S217 and S221 similarly to steps S113 and S117. The control unit 14 controls the display unit 7 to display various processing results such as history information, genealogy information, and the like (step S219), and ends a series of processings.

In the identifying processing at step S209, the area identifying unit 2f provides each object area at the processing target time point with an identifier similarly to step S107, and further provides each area parameter into which the cell-division information is written by the cell-division determining unit 12g with an identifier indicating a derivation via the cell division and the parent-child relationship with an object area corresponding to the cell before the cell division. For example, when the area parameters of the object areas O₈ and O₉ shown in FIG. 3 have the cell-division information, the area identifying unit 2f provides the areas O₈ and O₉ with an identifier ID_{4,1} and an identifier ID_{4,2}, respectively to indicate that the areas O₈ and O₉ are derived from the area O₄ having the identifier ID₄ via the cell division.

Here, an identifier denoted as "ID_{A,B}" means that an object area having this identifier ID_{A,B} is derived from an area having an identifier ID_{A} via the cell division. When the denotation style of this identifier is applied to generations thereafter, and a cell corresponding to the object area having the identifier ID_{A,B} makes the cell division, the object areas of generations after the division is provided with an identifier ID_{A,B,C,} so that the genealogy of the cell division of the object areas having the identifier ID_{A} can be tracked. In the genealogy information generating processing at step S215, the genealogy generator 14d refers to an identifier in this denotation style, and associates the parent-child relationship over respective generations with time series to generate the genealogy information about the cell division.

Next, a cell-division determining processing performed by the cell-division determining unit 12g at step S207 will be explained. Here, a processing procedure of determining, with respect to the object areas O₄, O₈, and O₉ shown in FIG. 3, whether the object areas O₈ and O₉ are derived from the object are O₄ will be exemplified.

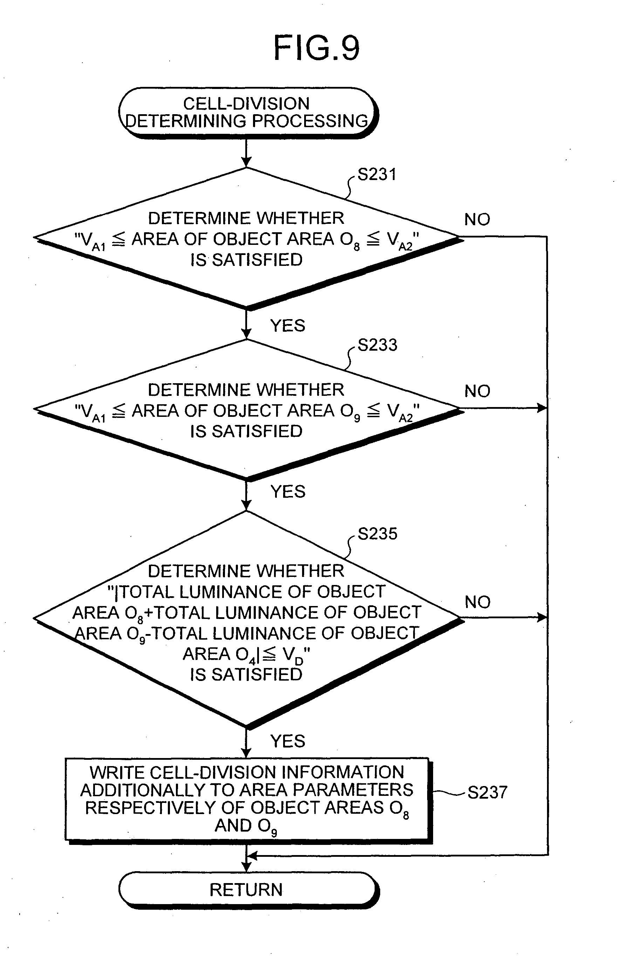

FIG. 9 is a flowchart of a first processing procedure of the cell-division determining processing. The flowchart shown in FIG. 9 explains, as one example, a procedure of the cell-division determining processing based on a characteristic that an area of a daughter cell after the cell division is smaller than that of a normal cell, and a total luminance of the cell before the cell division is approximately equal to that of the corresponding cell after the cell division.

As shown in FIG. 9, the cell-division determining unit 12g determines whether an area of the object area O₈ is not less than a predetermined threshold V_{A1} and not more than a predetermined threshold V_{A2} (step S231). When the area of the object area O₈ is not less than the threshold V_{A1} and not more than the threshold V_{A2} ("Yes" at step S231), the cell-division determining unit 12g determines whether an area of the object area O₉ is not less than the threshold V_{A1} and not more than the threshold V_{A2} (step S233). When the area of the object area O₉ is not less than the threshold V_{A1} and not more than the threshold V_{A2} ("Yes" at step S233), the cell-division determining unit 12g determines whether a value, which is calculated by subtracting a total luminance of image data corresponding to the object area O₄ as a pixel value from the summation of the total luminance of image data corresponding to the object area O₈ as a pixel value and the total luminance of image data corresponding to the object area O₉ as a pixel value, is not more than a predetermined threshold V_{D} (step S235). When the value after the subtraction is not more than the threshold V_{D} ("Yes" at step S235), the cell-division determining unit 12g determines that the object areas O₈ and O₉ are derived from the object area O₄ and writes the cell-division information additionally to the area parameters respectively of the object areas O₈ and O₉, and the process returns to step S207.

On the other hand, when the determination conditions of steps S231, S233, and S235 are not satisfied, the cell-division determining unit 12g determines that the object areas O₈ and O₉ are not derived from the object area O₄ via the cell division, and the process returns to step S207.

The thresholds V_{A1} and V_{A2} as determination criteria at steps S231 and S233 are preferably set to a value which is 0.5 times as large as an average area of an object area, and a value which is 0.9 times as large as the average area of the object area, respectively.

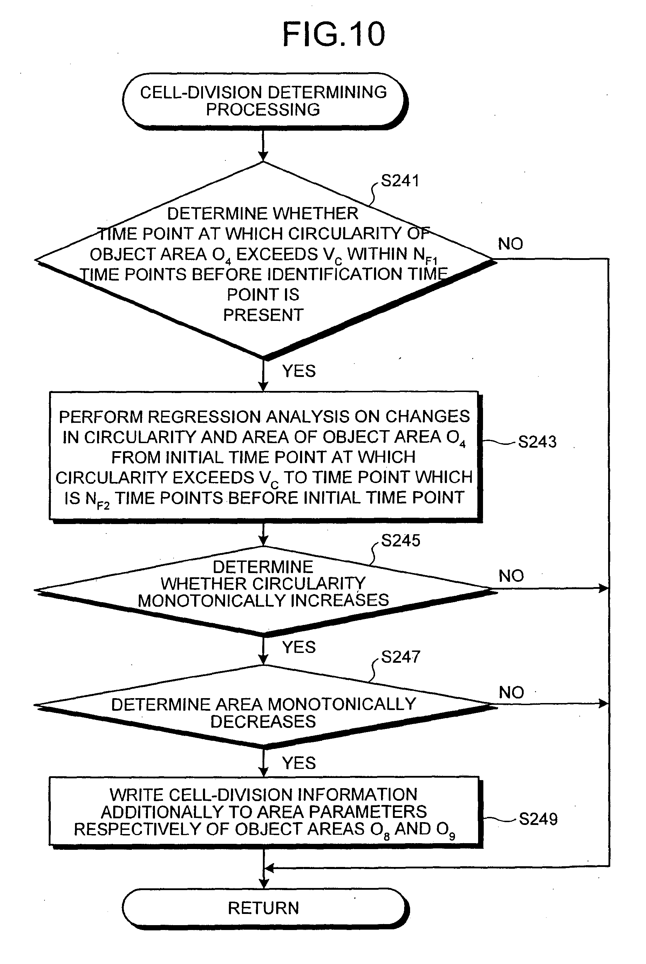

FIG. 10 is a flowchart of a second processing procedure of the cell-division determining processing. The flowchart shown in FIG. 10 explains, as another example, a procedure of the cell-division determining processing based on a characteristic that a cell right before the cell division has substantially a sphere shape while constricting with the course of time, and then makes the cell division.

As shown in FIG. 10, the cell-division determining unit 12g determines whether a time point at which a circularity of the object area O₄ exceeds a predetermined threshold V_{C} is present within N_{F1} time points before the identification time point (step S241). When such a time point exceeding the threshold V_{C} is present ("Yes" at step S241), a regression analysis is performed on changes in the circularity and the area of the object area O₄ from an initial time point when the circularity of the object area O₄ exceeds the threshold V_{C} to the time point which is N_{F2} time points before the first time point (step S243). The cell-division determining unit 12g determines whether or not the circularity of the object area O₄ monotonically increases based on the result of the regression analysis (step S245). When the circularity monotonically increases ("Yes" at step S245), the cell-division determining unit 12g further determines whether or not the area of the object area O₄ monotonically decreases (step S247). When the area of the object area O₄ monotonically decreases ("Yes" at step S247), the cell-division determining unit 12g determines that the object areas O₈ and O₉ are derived from the object area O₄ via the cell division and writes the cell division information additionally to the area parameters respectively of the object areas O₈ and O₉, and the process returns to step S207.

On the other hand, when the determination conditions in the determination processings respectively of steps S241, S245, and S247 are not satisfied, the cell-division determining unit 12g determines that the object areas O₈ and O₉ are not derived from the object area O₄ via the cell division, and the process returns to step S207.

In the regression analysis at step S243, the cell-division determining unit 12g performs a collinear approximation of the transition of changes in the circularity and the area of the object area O₄ with the course of time to calculate a tendency of changes in the circularity and the area based on a tilt of the approximated straight line.

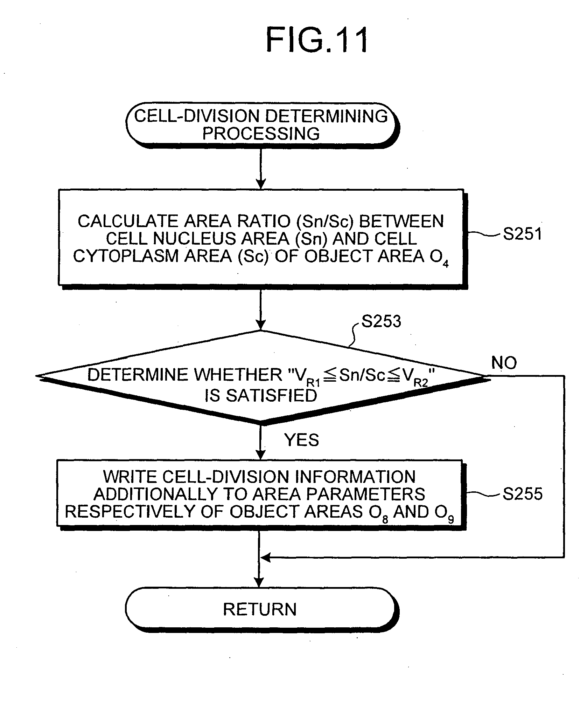

FIG. 11 is a flowchart of a third processing procedure of the cell-division determining processing. The flowchart shown in FIG. 11 explains, as still another example, a procedure of the cell-division determining processing based on a characteristic that a nuclear membrane disappears in the cell right before the cell division, and constituents in a cell nucleus diffuses over a cell cytoplasm.

As shown in FIG. 11, the cell-division determining unit 12g calculates a cell nucleus area Sn as a first element of the object area O₄ and a cell cytoplasm area Sc as a second element, calculates an area ratio Sn/Sc (step S251), and determines whether the area ratio Sn/Sc is not less than a threshold V_{R1} and not more than a predetermined threshold V_{R2} (step S253). When the area ratio Sn/Sc is not less than the threshold V_{R1} and not more than the threshold V_{R2} ("Yes" at step S253), the cell-division determining unit 12g determines that the object areas O₈ and O₉ are derived from the object area O₄ via the cell division and writes the cell division information additionally to the area parameters respectively of the object areas O₈ and O₉, and the process returns to step S207. On the other hand, when the determination condition in the determination processing at step S253 is not satisfied ("No" at step S253), the cell-division determining unit 12g determines that the object areas O₈ and O₉ are not derived from the object area O₄ via the cell division, and the process returns to step S207. Here, the threshold V_{R1} and the threshold V_{R2} are preferably set to be not more than "1" and not less than "1", respectively.

When the occurrence of the cell division is determined in the procedure of the cell division processing shown in FIG. 11, the cell nucleus and the cell cytoplasm in the cell corresponding to the object area O₄ are preferably stained individually so that the area of the cell nucleus and the area of the cell cytoplasm can be observed independently with each other.

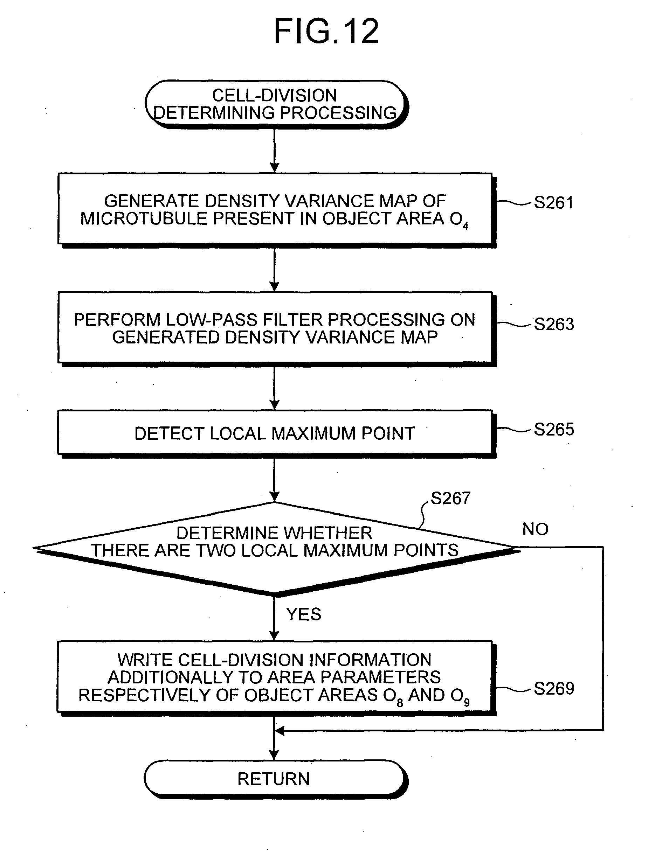

FIG. 12 is a flowchart of a fourth processing procedure of the cell-division determining processing. The flowchart shown in FIG. 12 explains, as still another example, a procedure of the cell-division determining processing based on a characteristic that a microtubule forms two mitotic spindles and no other region is present except for the area of the mitotic spindles in the cell right before the cell division.

As shown in FIG. 12, the cell-division determining unit 12g generates a density variance map which visualizes a density variance of the microtubule as a specific element present in the object area O₄ in two dimension or three dimension (step S261), performs a low-pass filter processing on the generated density variance map (step S263), detects a local maximum point in density from the density variance map after the filter processing (step S265), and determines whether there are two local maximum points as a result of the detection (step S267). When there are two local maximum points ("Yes" at step S265), the cell-division determining unit 12g determines that the object areas O₈ and O₉ are derived from the object area O₄ via the cell division and writes the cell division information additionally to the area parameters respectively of the object areas O₈ and O₉ (step S269), and the process returns to step S207. On the other hand, when there are not two local maximum points ("No" at step S267), the cell-division determining unit 12g determines that the object areas O₈ and O₉ are not derived via the cell division, and the process returns to step S207.

When the occurrence of the cell division is determined in the procedure of the cell division processing shown in FIG. 12, the microtubule in the cell corresponding to the object are O₄ is preferably stained so that the microtubule can be observed discriminably from the other region.

The cell-division determining unit 12g may determine the occurrence of the cell division by using any one of the first to fourth procedures of the cell-division determining processing, or may determine in combination with two or more procedures from the first to the fourth procedures. The combination of two or more procedures enables more accurate determination than a single processing procedure.

Various characteristic values, i.e., the area, total luminance, circularity, area of cell nucleus, area of cell cytoplasm, density of microtubule, and the like, of an object area used in the first to fourth procedures of the cell division determining processing are preferably calculated by the area parameter calculating processing at step S205.

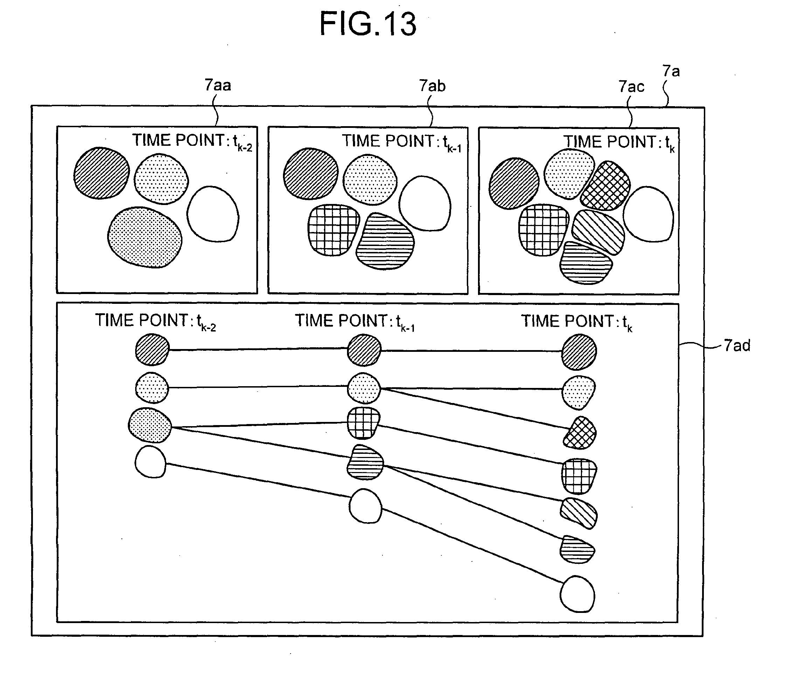

Here, one example of a display result to be displayed in the display unit 7 will be shown in FIG. 13. As shown in FIG. 13, a screen 7a of the display device provided to the display unit 7 is compartmented into four display areas 7aa, 7ab, 7ac, and 7ad. Image information showing object areas at each of three time points including the time point tₖ as the processing target time point, i.e., tₖ₋₂, tₖ₋₁, and tₖ, is displayed in each of the display areas 7aa, 7ab, and 7ac. Correspondences of each object area of respective time points are displayed in a tree diagram format together with the genealogy information of a cell which is given birth to via the cell division in the display area 7ad.

Each object area is provided with a pseudo color, luminance, line, pattern, and the like, and displayed as a label image on the screen 7a. The image display may be performed by using actual image data which is processed after imaging an object area, in place of the label image, or the label image and an image based on the actual image data may be displayed to be switchable therebetween. Moreover, an object area provided with an identifier indicating the coidentity over the time points may be provided with the same color or a hatching so that the shape of the object area at each time point can be discriminably displayed.

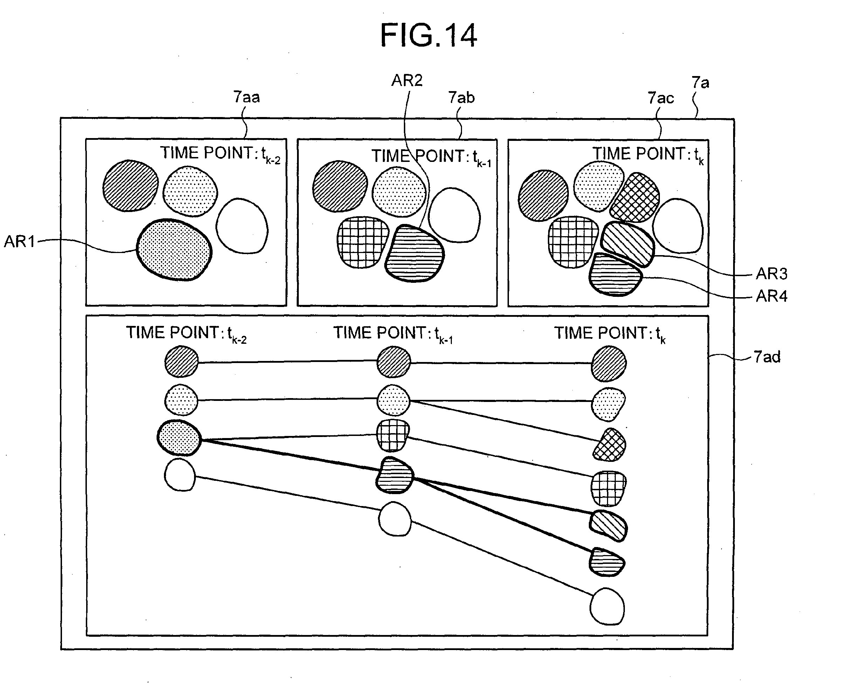

The corresponding object area at each time point may be displayed with an emphasis based on an instruction from the outside via the operation of a mouse as the input unit 6 operated by the operator. In this case, when the operator selects any one of the object areas in the display areas 7aa, 7ab, and 7ac, the selected object area and the object area having a relation with the selected object area in the genealogy are displayed together with the emphasis, for example as shown in FIG. 14.

FIG. 14 illustrates a case where an object area AR2 at the time point tₖ₋₁ is selected based on the instruction from the operator, and an object area AR1 at the time point tₖ₋₂ which is before the time point tₖ₋₁, and object areas AR3 and AR4 at the time point tₖ which is after the time point tₖ₋₁ are displayed in addition to the selected object area AR2 with the emphasis. With such a display with the emphasis, the genealogy can be recognized visually.

As explained above, in the object-tracking apparatus, the microscope system, and the object-tracking program according to the second embodiment, the cell-division determining unit 12g determines whether a cell as a tracking target has made a cell division between the identification time point and the processing target time point. When the cell-division determining unit 12g determines that the cell division has occurred, the cell-division determining unit 12g writes the cell-division information to the area parameter of each object area corresponding to the cell after division, the cell-division information indicating the derivation via the cell division. The genealogy generator 14d refers to an identifier which is provided based on the cell-division information to generate the genealogy information. Thus, it is possible not only to perform an accurate tracking of a tracking target, but also to recognize an intergenerational relation of each cell over a plurality of time points together.

### INDUSTRIAL APPLICABILITY

As explained, the object-tracking apparatus, the microscope system, and the object-tracking program according to the present invention is useful for an object-tracking apparatus, a microscope system, and an object-tracking program for observing an imaging target in an image, and more specifically useful for an object-tracking apparatus, a microscope system, and an object-tracking program which allows an observation of an image area corresponding to an imaging target in each of images picked up at multiple time points in time series and a tracking of the imaging target.

## Claims

1. An object-tracking apparatus which allows an observation of an object image area corresponding to an imaging target in each of images captured at multiple time points in time series and a tracking of the imaging target, comprising:
an image acquiring unit that acquires image data of each of the images;
an area detector that detects the object image area from each of the images based on the image data acquired by the image acquiring unit;
a parameter calculator that calculates an area parameter which indicates a property of the object image area detected by the area detector based on the image data;
an area identifying unit that provides the object image area at a processing target time point with an identifier which shows a correspondence between the object image area at the processing target time point and the object image area at an identification time point based on an area parameter indicating a property of the object image area at the processing target time point and an area parameter indicating a property of the object image area at the identification time point, the identification time point being one of a time point before the processing target time point and a time point after the processing target time point;
a history generator that associates the identifier provided by the area identifying unit with an area parameter corresponding to the identifier to generate property information for each of the multiple time points, and associates the generated property information of respective time points with time series to generate history information;
a consistency determining unit that determines whether the history information from a determination time point to the processing target time point has a consistency based on the property information of each time point from the determination time point to the processing target time point, the determination time point being one of a time point which is predetermined plural time points before the processing target time point and a time point which is predetermined plural time points after the processing target time point; and
a history correcting unit that corrects, when the consistency determining unit determines that the history information has no consistency, the history information so as to be consistent from the determination time point to the processing target time point.

2. The object-tracking apparatus according to claim 1, wherein the area detector detects a plurality of object image areas from each of the images.

3. The object-tracking apparatus according to claim 1, wherein the area detector detects the object image area from each of the images based on a pixel value of the image data which has a predetermined correspondence with a preset value.

4. The object-tracking apparatus according to claim 1, wherein the parameter calculator calculates the area parameter which indicates a property of each object image area.

5. The object-tracking apparatus according to claim 1, wherein the parameter calculator calculates the area parameter which indicates a property of an aggregation of the object image area.

6. The object-tracking apparatus according to claim 1, wherein the area identifying unit retrieves an area parameter which has a predetermined correspondence with the area parameter at the processing target time point from area parameters at the identification time point, and provides the object image area at the processing target time point with an identifier which shows a coidentity with an object image area corresponding to the retrieved area parameter.

7. The object-tracking apparatus according to claim 6, wherein
the area parameter indicates a position of the object image area in each of the images, and
the area identifying unit retrieves, from area parameters at the identification time point, an area parameter indicating a position which corresponds most to the position indicated by the area parameter at the processing target time point, and provides the object image area at the processing target time point with an identifier which shows a coidentity with an object image area corresponding to the retrieved area parameter.

8. The object-tracking apparatus according to claim 6, wherein
the area parameter indicates a position and an area of the object image area in each of the images, and
the area identifying unit retrieves, from area parameters at the identification time point, an area parameter indicating a position which corresponds most to the position, within a predetermined range, indicated by the area parameter at the processing target time point and an area which corresponds most to the area indicated by the area parameter at the processing target time point, and provides the object image area at the processing target time point with an identifier which shows a coidentity with an object image area corresponding to the retrieved area parameter.

9. The object-tracking apparatus according to claim 6, wherein
the area parameter indicates a range of the object image area in each of the images, and
the area identifying unit retrieves, from area parameters at the identification time point, an area parameter indicating a range which is most widely in common with the range indicated by the area parameter at the processing target time point, and provides the object image area at the processing target time point with an identifier which shows a coidentity with an object image area corresponding to the retrieved area parameter.

10. The object-tracking apparatus according to claim 6, wherein the area identifying unit, when a plurality of area parameters corresponding to one area parameter at the processing target time point are retrieved at the identification time point as a retrieval result, provides the object image area corresponding to the one area parameter with an identifier which shows a coidentity with object image areas respectively corresponding to the plurality of area parameters.

11. The object-tracking apparatus according to claim 6, wherein the area identifying unit, when one area parameter corresponding to a plurality of area parameters at the processing target time point is retrieved at the identification time point as a retrieval result, provides each object image area corresponding to each of the plurality of area parameters with an identifier which shows a coidentity with an object image area corresponding to the one area parameter.

12. The object-tracking apparatus according to claim 6, wherein
the area identifying unit retrieves, after providing each of all object image areas at the processing target time point with the identifier, an unsupported object image area from object image areas at the identification time point, the unsupported object image area meaning an object image area which shows no coidentity with any identifier, and
the history generator generates, when the area identifying unit retrieves the unsupported object image area, property information by adding unsupported information to property information corresponding to the retrieved unsupported object image area, and generates the history information by treating the generated property information as the property information at the processing target time point.

13. The object-tracking apparatus according to claim 1, wherein
the area parameter indicates a number and a position of the object image area in each of the images, and
the consistency determining unit determines whether the history information from the determination time point to the processing target time point has a consistency based on the number and the position indicated by the area parameter at each time point from the determination time point to the processing target time point.

14. The object-tracking apparatus according to claim 10, wherein
the consistency determining unit determines, when the property information of one object image area at each time point after the determination time point to the processing target time point has a plurality of identifiers, that the history information from the determination time point to the processing target time point has no consistency, and
the history correcting unit unites each property information at the determination time point, each showing a coidentity with each of the plurality of identifiers, and associates the united property information with the one object image area to correct the history information.

15. The object-tracking apparatus according to claim 11, wherein
the consistency determining unit determines, when the property information of a plurality of object image areas at each time point after the determination time point to the processing target time point has one identifier indicating same correspondence, that the history information from the determination time point to the processing target time point has no consistency, and
the history correcting unit divides property information at the determination time point, whose identifier shows a coidentity and the same correspondence, and associates the divided property information with the plurality of object image areas respectively to correct the history information.

16. The object-tracking apparatus according to claim 12, wherein
the consistency determining unit determines, when the property information of each time point after the determination time point to the processing target time point includes a common property information to which the unsupported information is added, that the history information has no consistency, and
the history correcting unit deletes the common property information to which the unsupported information is added, of each time point after the determination time point to the processing target time point to correct the history information.

17. The object-tracking apparatus according to claim 1, further comprising a division determining unit that determines, based on area parameters respectively of the processing target time point and the identification time point, whether the imaging target has made a division between the processing target time point and the identification time point, and writes, when the imaging target is determined to have made the division, division information indicating a derivation via the division to an area parameter of an object image area corresponding to each imaging target after the division, wherein
the area identifying unit provides the object image area, at the processing target time point, corresponding to the area parameter to which the division information is written with an identifier which indicates the derivation via the division and a parent-child relationship with the object image area corresponding to the imaging target before the division.

18. The object-tracking apparatus according to claim 17, wherein
the area parameter indicates an area of the object image area in each of the images and a total pixel value of image data corresponding to the object image area, and
the division determining unit determines, with respect to two object image areas each as a processing target at the processing target time point and one object image area as a processing target at the identification time point, whether an area indicated by an area parameter corresponding to each of the two object image areas is within a preset area range; further determines, when each area is determined to be within the area range, whether a value calculated by subtracting a total pixel value indicated by an area parameter corresponding to the one object image area from a summation of pixel values indicated by the area parameters corresponding to the two object image areas is not more than a predetermined value; determines, when the value after the subtraction is determined to be not more than the predetermined value, that the imaging target has made the division between the processing target time point and the identification time point; and writes the division information to the area parameters respectively corresponding to the two object image areas.

19. The object-tracking apparatus according to claim 17, wherein
the area parameter indicates a circularity and an area of the object image area in each of the images, and
the division determining unit determines, with respect to two object image areas each as a processing target at the processing target time point and one object image area as a processing target at the identification time point, whether a time point when the circularity indicated by the area parameter corresponding to the one object image area exceeds a predetermined circularity, is present among time points from the identification time point to a first time point which is predetermined plural time points before the identification time point; further determines, when the time point when the circularity exceeds the predetermined degree is determined to be present, whether the circularity indicated by the area parameter corresponding to the one object image area monotonically increases and whether the area indicated by the area parameter corresponding to the one object image area monotonically decreases, respectively in time series, at each time point from an initial time point when the circularity exceeds the predetermined degree to a second time point which is predetermined time points before the initial time point; determines, when the circularity and the area are determined to have monotonically increased and decreased respectively in time series, that the imaging target has made the division between the processing target time point and the identification time point; and writes the division information to the area parameters respectively corresponding to the two object image areas.

20. The object-tracking apparatus according to claim 17, wherein
the area parameter indicates an area corresponding to each of a first element and a second element in the object image area, and
the division determining unit determines, with respect to two object image areas each as a processing target at the processing target time point and one object image area as a processing target at the identification time point, whether an area ratio between the area of the first element and the area of the second element, the areas of the first element and the second element being indicated by the area parameter corresponding to the one object image area, is within a preset area ratio range; determines, when the area ratio is determined to be within the area ratio range, that the imaging target has made the division between the processing target and the identification time point; and writes the division information to the area parameters respectively corresponding to the two object image areas.

21. The object-tracking apparatus according to claim 17, wherein
the area parameter indicates a density variance of an area corresponding to a specific element in the object image area, and
the division determining unit detects, with respect to two object image areas each as a processing target at the processing target time point and one object image area as a processing target at the identification time point, a local maximum point in the density variance indicated by the area parameter corresponding to the one object image area; determines whether the number of the detected local maximum point is two; determines, when the number of the detected local maximum point is determined to be two, that the imaging target has made the division between the processing target time point and the identification time point; and writes the division information to the area parameters respectively corresponding to the two object image areas.

22. The object-tracking apparatus according to claim 17, further comprising a genealogy generator that generates genealogy information in which the parent-child relationship over respective time points is associated with time series based on an identifier which is provided to an object image area corresponding to an area parameter where the division information is written at each time point, and which indicates the derivation via the division and the parent-child relationship.

23. The object-tracking apparatus according to claim 1, wherein the imaging target is a living cell.

24. The object-tracking apparatus according to claim 1, further comprising an imaging unit that performs an intermittent imaging of the imaging target to generate the image data, wherein
the image acquiring unit acquires the image data generated by the imaging unit.

25. A microscope system including the object-tracking apparatus according to claim 24, comprising an imaging optical system that performs a magnifying projection of an image of the imaging target, wherein
the imaging unit in the object-tracking apparatus captures an image of the imaging target to generate the image data, the imaging target being magnified and projected on an imaging surface of the imaging optical system by the imaging optical system.

26. An object-tracking program for making an object-tracking apparatus which detects an object image area corresponding to an imaging target in each of images captured at multiple time points and tracks the imaging target in time series, detect the object image area and track the imaging target in time series, the object-tracking program causing the object-tracking apparatus to perform:
an image acquiring procedure that acquires image data of each of the images;
an area detecting procedure that detects the object image area from each of the images based on the image data acquired in the image acquiring procedure;
a parameter calculating procedure that calculates an area parameter which indicates a property of the object image area detected in the area detecting procedure based on the image data;
an area identifying procedure that provides the object area at a processing target time point with an identifier which shows a correspondence between the object image area at the processing target time point and the object image area at an identification time point based on an area parameter indicating a property of the object image area at the processing target time point and an area parameter indicating a property of the object image area at the identification time point, the identification time point being one of a time point before the processing target time point and a time point after the processing target time point;
a history generating procedure that associates the identifier provided in the area identifying procedure with an area parameter corresponding to the identifier to generate property information for each of the multiple time points, and associates the generated property information of respective time points with time series to generate history information;
a consistency determining procedure that determines whether the history information from a determination time point to the processing target time point has a consistency based on the property information of each time point from the determination time point to the processing target time point, the determination time point being one of a time point which is predetermined plural time points before the processing target time point and a time point which is predetermined plural time points after the processing target time point; and
a history correcting procedure that corrects, when the consistency determining procedure determines that the history information has no consistency, the history information so as to be consistent from the determination time point to the processing target time point.

27. The object-tracking program according to claim 26, further causing the object-tracking apparatus to perform a division determining procedure that determines, based on area parameters respectively of the processing target time point and the identification time point, whether the imaging target has made a division between the processing target time point and the identification time point, and writes, when the imaging target is determined to have made the division, division information indicating a derivation via the division to an area parameter of an object image area corresponding to each imaging target after the division, wherein
the area identifying procedure provides the object image area, at the processing target time point, corresponding to the area parameter to which the division information is written with an identifier which indicates the derivation via the division and a parent-child relationship with the object image area corresponding to the imaging target before the division.

28. The object-tracking program according to claim 27, further causing the object-tracking apparatus to perform a genealogy generating procedure that generates genealogy information in which the parent-child relationship over respective time points is associated with time series based on an identifier which is provided to an object image area corresponding to an area parameter where the division information is written at each time point, and which indicates the derivation via the division and the parent-child relationship.
